# EUROPÄISCHE PATENTSCHRIFT

(11) **EP 2 697 181 B1**
(45) Veröffentlichungstag und Bekanntmachung des Hinweises auf die Patenterteilung: **22.07.2015**
(21) Anmeldenummer: 12777880.1
(22) Anmeldetag: 04.10.2012
(51) Int. Cl.: F27B 1/14, F27B 1/22, F27B 1/24, F27B 1/26, C04B 38/00, C04B 20/06, F27B 1/00

(54) **VERFAHREN ZUM GESCHLOSSENZELLIGEN BLÄHEN VON MINERALISCHEM MATERIAL**
METHOD FOR THE CLOSED-CELL EXPANSION OF MINERAL MATERIAL
PROCÉDÉ DESTINÉ AU GONFLAGE À ALVÉOLES FERMÉES D'UN MATÉRIAU MINÉRAL

(30) Priorität: 10.10.2011 AT 5552011
(43) Veröffentlichungstag der Anmeldung: 19.02.2014
(73) Patentinhaber: Binder+Co AG, 8200 Gleisdorf (AT)
(72) Erfinder: BRUNNMAIR, Ernst Erwin, 8045 Graz (AT)
(74) Vertreter: KLIMENT & HENHAPEL
(86) Internationale Anmeldenummer: PCT/EP2012/069653
(87) Internationale Veröffentlichungsnummer: WO 2013/053635

(56) Entgegenhaltungen:
- WO-A1-2009/009817
- DE-A1- 1 471 380
- DE-A1- 19 722 906
- DE-A1-102007 025 099
- US-A- 3 627 285
- ZÄHRINGER K ET AL: "Development of a simulation model for the expansion of perlite", GLASS SCIENCE AND TECHNOLOGY, DEUTSCHE GLASTECHNISCHE GESELLSCHAFT, OFFENBACH, DE, Bd. 74, 1. Januar 2001 (2001-01-01), Seiten 57-64, XP009165214, ISSN: 0946-7475

## Beschreibung

### GEBIET DER ERFINDUNG

Die vorliegende Erfindung betrifft ein Verfahren zur Herstellung eines geblähten Granulats aus sandkornförmigem, mineralischem Material mit einem Treibmittel, beispielsweise aus Perlit- oder Obsidiansand; wobei das Material in einen senkrecht stehenden Ofen von oben, bevorzugt über eine Schurre, aufgegeben wird; das Material in einem Ofenschacht des Ofens entlang einer Fallstrecke durch mehrere, vertikal voneinander getrennt angeordnete Heizzonen fällt, wobei jede Heizzone mit zumindest einem unabhängig steuerbaren Heizelement beheizt werden kann; das Material dabei auf eine kritische Temperatur erhitzt wird, bei welcher die Oberflächen der Sandkörner plastisch werden und die Sandkörner aufgrund des Treibmittels gebläht werden; und das geblähte Material am unteren Ende des Ofens ausgetragen wird.

Außerdem bezieht sich die vorliegende Erfindung auf eine Vorrichtung zur Herstellung eines geblähten Granulats, umfassend einen senkrecht stehenden Ofen samt Ofenschacht mit einer Aufgabeöffnung am oberen Ende des Ofenschachts zur Aufgabe eines sandkornförmigen Materials und einer Austrageöffnung am unteren Ende des Ofenschachts sowie einer zwischen Aufgabe- und Austrageöffnung im Ofenschacht befindlichen Fallstrecke, welche durch mehrere, vertikal voneinander getrennt angeordnete Heizzonen führt, wobei die Heizzonen jeweils zumindest ein voneinander unabhängig steuerbares Heizelement aufweisen, um das Material auf eine kritische Temperatur zu erhitzen, sowie umfassend mehrere Temperatursensoren zur direkten oder indirekten Messung der Materialtemperatur und/oder Mittel zur Bestimmung der Leistung der Heizelemente der Heizzonen.

### STAND DER TECHNIK

Leichtstoffe sind in der Bauindustrie gefragte Ausgangsmaterialien für diverse Anwendungen wie der Fertigputzeindustrie oder in der Isoliertechnik. Die Leichtstoffe unterteilen sich prinzipiell in erdölbasierte Materialien und mineralische Stoffe. Erdölbasierte Materialien weisen zwar den Nachteil der Brennbarkeit auf, doch sind deren Herstellungsprozesse gut erforscht, was eine günstige Produktion ermöglicht. Paradebeispiel für einen erdölbasierten Isolierstoff, der in der Bauindustrie bevorzugt für die Wärmedämmung eingesetzt wird, ist Polystyrol. Aufgrund des günstigen Preises wird der gravierende Nachteil der leichten Entflammbarkeit in Kauf genommen, teils mit katastrophalen Folgen, wenn es zu Bränden kommt.

Dem gegenüber sind Isolierstoffe aus mineralischen Stoffen, bei denen es sich hauptsächlich um (kristall)wasserhaltige Gesteine (z.B. vulkanische Gesteine Perlit, Obsidian u.ä.) in Granulatform handelt, nicht entflammbar. Allerdings sind die Herstellungsprozesse noch nicht so gut erforscht wie jene erdölbasierter Isolierstoffe. Hinsichtlich der erzielbaren Qualitäten und der möglichen Herstellungskosten scheinen die Herstellungsprozesse von mineralischen Isolierstoffen jedoch noch eine Menge Entwicklungspotential zu haben.

Aus dem Stand der Technik sind seit langem Perlitöfen bekannt, in welchen heiße Verbrennungsluft von unten nach oben durch ein vertikal angeordnetes Rohr geblasen wird. Der zu blähende (Perlit-)Sand wird dabei über eine Schurre von oben, d.h. jedenfalls in einem Bereich des Ofens, der über dem unteren Ende des Ofens angeordnet ist, nach unten aufgegeben. Der Sand erhitzt dabei im heißen Abgas im Gegenstrom bis auf eine kritische Temperatur, bei welcher der Sand plastisch wird und das im Sand gebundene Wasser verdampft. Mit dem Verdampfungsvorgang einhergehend ist die Aufblähung des Sands um das bis zu 20-fache seines ursprünglichen Volumens.

Durch den Blähvorgang werden die einzelnen Sandkörner aufgerissen, sodass ein offenporiges, sehr leichtes, aber auch stark hygroskopisches Granulat entsteht. Dieses Granulat wird mit dem Abgasstrom nach oben ausgetragen und in einem Filter abgeschieden. Das Granulat findet hauptsächlich in der Isoliertechnik zur thermischen Isolation von Tanks für Flüssiggas (LNG) Verwendung, aber auch als Zusatz für Fertigputze zur Verbesserung der Verarbeitbarkeit sowie als Isolierschüttung zum Aufbau von Fußböden in Wohnhäusern.

Großer Nachteil des so geblähten Perlits ist seine Offenporigkeit, welche stark hygroskopische Eigenschaften sowie eine beschränkte Formstabilität bedingt. Um der Hygroskopie zu begegnen, ist eine nachgeschaltete Imprägnierung mit Silikon aus dem Stand der Technik bekannt, doch bedeutet dies einen teuren, zusätzlichen Verfahrensschritt verbunden mit dem Nachteil der Brennbarkeit von Silikon ab ca. 200° C.

Bisherige Versuche, geschlossenzellige geblähte Perlite herzustellen, müssen als unbefriedigend spezifiziert werden. Einerseits sind die genauen Ursachen der geschlossenzelligen Blähung nicht erforscht, andererseits fehlt bislang die Möglichkeit, den Prozess der geschlossenzelligen Blähung zu kontrollieren und gezielt zu beeinflussen. Letzteres bedeutet auch, dass die genaue Oberflächenstruktur der geblähten Körner beim Herstellungsprozess nicht bewusst eingestellt werden kann. Dies vereitelt beispielsweise das Einstellen der Rauigkeit, welche wiederum für die Verarbeitung mit anderen Stoffen eine wichtige Rolle spielt.

Außerdem hat es sich gezeigt, dass im Falle von einem zu hohen Wassergehalt das bereits geblähte Korn zerreißt, bevor dessen Oberfläche durch den Abkühlvorgang beim Blähen wieder erstarrt ist. Im Hinblick hierauf ist es aus dem Stand der Technik bekannt, dass der Wassergehalt, d.h. der Anteil des im Material gebundenen Wassers, durch eine thermische Konditionierung des Rohsands auf den für das Blähen optimalen Wert reduziert werden kann.

Eine erneute Erwärmung des Sandkorns nach dem eigentlichen Blähvorgang kann eine Fortsetzung der Blähung bewirken, jedoch besteht hierbei die Gefahr, dass das bereits geblähte Korn zerreißt oder nach dem erneuten Blähvorgang sehr geringe Festigkeitswerte aufweist.

In der Patentliteratur werden lediglich einzelne Aspekte von Blähverfahren bzw. der dafür verwendeten Vorrichtungen behandelt - der zugrundeliegende Mechanismus bzw. die kontrollierte Verhinderung der Offenporigkeit des geblähten Granulats werden jedoch nicht berührt. So zeigt die EP 0225074 B1 ein Verfahren zur Wärmebehandlung blähbaren Materials, bestehend aus zwei Heizstufen mit Vorheizung und Heizung und anschließendem aktiven Abkühlen durch Blasen von Kühlmittel auf das aufgeblähte Material. Die AT 504051 B1 schlägt eine zusätzliche Siebung zwischen den beiden Heizstufen vor. Die WO 2009/009817 A1 zeigt einen Schachtofen, in welchem die Blähung stattfindet. Dabei wird das zu blähende Material von oben in den Ofen aufgegeben und am unteren Ende des Schachtofens ausgetragen, weshalb die WO 2009/009817 A1 als nächstkommender Stand der Technik angesehen wird.

### AUFGABE DER ERFINDUNG

Aufgabe der vorliegenden Erfindung ist es daher, ein Verfahren für das Blähen sandförmiger, mineralischer Materialien mit einem Treibmittel zur Verfügung zu stellen, bei dem eine geschlossene Oberfläche des geblähten Granulats kontrollierbar eingestellt werden kann, sodass das geblähte Granulat keine bzw. kaum Hygroskopie aufweist. Außerdem soll die Möglichkeit geschaffen werden, die Oberflächenstruktur des geblähten Granulats und damit dessen Rauigkeit gezielt zu beeinflussen. Aufgabe ist auch, eine Vorrichtung zur Durchführung des erfindungsgemäßen Verfahrens zur Verfügung zu stellen.

### DARSTELLUNG DER ERFINDUNG

Grundlage der Erfindung ist die in einer Vielzahl an Versuchen gewonnene Erkenntnis, dass der eigentliche Blähvorgang, dessen Basis die Erweichung des Sandkorns in Verbindung mit Wasserdampfbildung oder eines anderen Treibmittels ist, ein isenthalper Prozess ist. D.h. beim eigentlichen Blähvorgang mit der Vergrößerung des Sandkornvolumens bleibt die Enthalpie konstant, wobei grundsätzlich jedes Sandkorn ein thermodynamisches System darstellt, in der Praxis aber natürlich viele Sandkörner zusammengefasst ein System bilden.

Der isenthalpe Blähprozess ist mit einer abrupten Reduktion bzw. Verringerung der Materialtemperatur verbunden, welche auch als Temperatursturz bezeichnet werden kann und das Korn wieder härter macht sowie den Blähvorgang einfriert. Beispielsweise kann der isenthalpe Blähprozess mit einem Temperatursturz von über 100° C verbunden sein. D.h. die Materialtemperatur nimmt beim Blähvorgang signifikant ab, und die Plastizität verringert sich.

Dieses Wissen gestattet es nun, den Blähvorgang - praktisch unabhängig vom verwendeten Ausgangsmaterial - zu detektieren. D.h. es kann bestimmt werden, wann bzw. an welcher Stelle im Ofen die Blähung stattfindet. Dies wiederum gestattet es, ein Aufreißen des eben geblähten Korns erfolgreich zu verhindern, indem gezielt die Wärmezufuhr nach dem Blähprozess deutlich reduziert bzw. gänzlich unterbunden wird. D.h. der Temperatursturz stellt die erste Verringerung der Materialtemperatur dar, die an zwei aufeinander folgenden Positionen entlang des Weges des Materials durch den Ofen detektiert wird.

Die Detektion des Temperatursturzes erfolgt dabei entweder über eine direkte Temperaturmessung des Sands im Ofen oder indirekt, z.B. über den Umweg einer Kühlwassertemperaturmessung in einem nachgeschalteten Prozess oder über die Bestimmung einer Wärmeflussänderung.

Der Blähvorgang selbst findet in einem schachtförmigen, senkrecht stehenden Ofen statt, in welchen das Ausgangsmaterial von oben mittels einer Schurre aufgegeben wird. Das Innere des Ofens, der Ofenschacht bildet eine Fallstrecke für das Material, wobei entlang der Fallstrecke mehrere Heizzonen vertikal voneinander getrennt angeordnet sind, die Heizelemente aufweisen, welche unabhängig voneinander gesteuert und geregelt werden können. Hierdurch wird das Material auf eine kritische Temperatur erhitzt, bei der die Oberfläche der Sandkörner plastisch wird. Aufgrund des im Material gebundenen Wassers bildet sich Wasserdampf, dessen Druck das Sandkorn nun isenthalp aufbläht. Die damit einhergehende Abkühlung des Sandkorns wird detektiert. Selbstverständlich gilt dies auch, wenn statt Wasser ein anderes Treibmittel im Material vorhanden ist. Die Position des Blähvorgangs im Ofenschacht wird im Allgemeinen nicht für alle Sandkörner dieselbe sein, da die Sandkörner praktisch nie exakt gleich groß und schwer sind. Entsprechend wird der Blähvorgang in einem Bereich der Fallstrecke stattfinden. Dieser Bereich liegt zwischen jenen zwei Punkten, zwischen denen die erste Verringerung der Materialtemperatur festgestellt wird.

Ab jener Position bzw. ab jenem Bereich, an welcher bzw. in welchem ein Temperatursturz festgestellt wird, wird die Temperatur des Materials nicht wieder erhöht, sondern entlang der verbleibenden Fallstrecke gezielt reduziert. Letzteres geschieht, indem die Leistung der Heizelemente in den Heizzonen entlang der verbleibenden Fallstrecke als Funktion der verbleibenden Fallstrecke runter geregelt wird. Hierbei kann es sich um eine Stufenfunktion, die z.B. durch null Leistung der Heizelemente in den Heizzonen entlang der verbleibenden Fallstrecke realisiert werden kann, oder um eine Abnahme der Heizleistung in mehreren Schritten handeln. Die Austragung des Materials erfolgt über eine wassergekühlte Schurre, wobei die Wasserkühlung zur weiteren Kühlung des Materials beiträgt, wodurch dessen plastische Verformbarkeit weiter reduziert wird.

Daher ist es bei einem Verfahren zur Herstellung eines geblähten Granulats aus sandkornförmigem, mineralischem Material mit einem Treibmittel, beispielsweise aus Perlit- oder Obsidiansand; wobei das Material in einen senkrecht stehenden Ofen von oben, bevorzugt über eine Schurre, aufgegeben wird; das Material in einem Ofenschacht des Ofens entlang einer Fallstrecke durch mehrere, vertikal voneinander getrennt angeordnete Heizzonen fällt, wobei jede Heizzone mit zumindest einem unabhängig steuerbaren Heizelement beheizt werden kann; das Material dabei auf eine kritische Temperatur erhitzt wird, bei welcher die Oberflächen der Sandkörner plastisch werden und die Sandkörner aufgrund des Treibmittels gebläht werden; und das geblähte Material am unteren Ende des Ofens ausgetragen wird, vorgesehen, dass bei Detektion einer ersten Verringerung der Temperatur des Materials zwischen zwei aufeinander folgenden Positionen entlang der Fallstrecke die Heizelemente entlang der verbleibenden Fallstrecke in Abhängigkeit von der kritischen Temperatur geregelt werden.

Die beste Qualität der geblähten Körner hinsichtlich ihrer mechanischen Eigenschaften bzw. Festigkeit und gänzlich fehlender bzw. geringst möglicher Hygroskopie geht einher mit einer entsprechend festen und nicht aufgerissenen Oberfläche der geblähten Körner. Diese lässt sich in einer bevorzugten Ausführungsform des erfindungsgemäßen Verfahrens realisieren, indem die Heizelemente entlang der verbleibenden Fallstrecke so geregelt werden, dass sich die Materialtemperatur entlang der verbleibenden Fallstrecke nicht auf oder über die kritische Temperatur erhöht, wodurch ein neuerliches Blähen unterbunden wird.

Da die zu blähenden Sandkörner in der Praxis nicht alle identische Größe bzw. Masse aufweisen, erreichen in der Praxis nicht alle Sandkörner gleichzeitig die kritische Temperatur. Entsprechend findet der Blähprozess nicht an einem Punkt, sondern in einem Bereich des Ofenschachts statt. Nach jenem Bereich, in dem ein hinreichend großer Anteil an Sandkörnern gebläht wird, sodass ein Temperatursturz detektiert wird, wird die Leistung der Heizelemente entsprechend der oben genannten bevorzugten Ausführungsform des erfindungsgemäßen Verfahrens herunter geregelt, sodass ein neuerliches Blähen verhindert wird. In diesem Bereich werden jedoch nicht alle Sandkörner gebläht, da Sandkörner ab einer gewissen Größe bzw. Masse am Ende des Bereichs die kritische Temperatur noch nicht erreicht haben. In der oben angeführten bevorzugten Ausführungsform des erfindungsgemäßen Verfahrens können diese Sandkörner aufgrund der beschriebenen Regelung der Heizelemente aber auch nach dem Bereich nicht gebläht werden und werden daher ungebläht aus dem Ofenschacht bzw. Ofen ausgetragen. D.h. das aus dem Ofen ausgetragene Material enthält in diesem Fall einen gewissen Anteil an ungeblähten Sandkörnern. Ökonomisch kann es sinnvoll sein, diesen Anteil an ungeblähten Sandkörnern zu minimieren bzw. den Anteil an geblähten Sandkörnern zu maximieren und dafür eine Verschlechterung der Materialeigenschaften, insbesondere eine höhere Hygroskopie und geringere Festigkeit, in Kauf zu nehmen. In diesem Fall kann der Anteil an geblähten Sandkörnern gesteigert werden, indem das Material nach der Detektion des Temperatursturzes, entlang der verbleibenden Fallstrecke gezielt wieder bzw. weiter erhitzt wird, insbesondere auf bzw. über die für den Blähvorgang notwendige kritische Temperatur. Entlang der verbleibenden Fallstrecke können daher auch die schwereren bzw. größeren Sandkörner die kritische Temperatur erreichen und blähen, sodass der Gesamtanteil an geblähten Sandkörnern zunimmt. Daher ist es bei einer weiteren bevorzugten Ausführungsform des erfindungsgemäßen Verfahrens vorgesehen, dass die Heizelemente entlang der verbleibenden Fallstrecke so geregelt werden, dass sich die Materialtemperatur entlang der verbleibenden Fallstrecke auf oder über die kritische Temperatur erhöht. Für die bereits geblähten Körner bedeutet die erneute Zunahme der Temperatur entlang der verbleibenden Fallstrecke eine Verschlechterung der Materialqualität, da es zu einem neuerlichen Blähen kommen kann, bei dem die Festigkeit abnimmt oder bei dem die Oberfläche der bereits geblähten Sandkörner aufreißen kann. Letzteres wirkt sich insbesondere negativ hinsichtlich der damit einhergehenden Hygroskopie aus.

Bezüglich des verwendeten Materials können nicht nur mineralische Sande verwendet werden, in denen Wasser als Treibmittel gebunden ist, wie beispielsweise Perlit- oder Obsidiansand. Ebenso kann es sich um mineralischen Staub handeln, der mit wasserhaltigem mineralischem Bindemittel gemischt ist, wobei in diesem Fall das wasserhaltige mineralische Bindemittel als Treibmittel wirkt. Der Blähvorgang kann in diesem Fall folgendermaßen vor sich gehen:

Der mineralische Staub, der aus relativ kleinen Sandkörnern von beispielsweise 20 µm Durchmesser besteht, bildet mit dem Bindemittel größere Körner von beispielsweise 500 µm. Bei einer kritischen Temperatur werden die Oberflächen der Sandkörner des mineralischen Staubs plastisch und bilden geschlossene Oberflächen der größeren Körner bzw. verschmelzen zu solchen. Da die geschlossene Oberfläche eines einzelnen größeren Korns in der Regel insgesamt kleiner ist als die Summe aller Oberflächen der einzelnen Sandkörner des mineralischen Staubs, welche an der Bildung dieses größeren Korns beteiligt sind, wird auf diese Weise Oberflächenenergie gewonnen bzw. nimmt das Verhältnis von Oberfläche zu Volumen ab.

In diesem Moment liegen also größere Körner mit jeweils einer geschlossenen Oberfläche vor, wobei die Körner eine Matrix aus mineralischem Sandstaub sowie wasserhaltiges mineralisches Bindemittel aufweisen. Da die Oberflächen dieser größeren Körner nach wie vor plastisch sind, kann in der Folge der sich ausbildende Wasserdampf die größeren Körner blähen. D.h. das wasserhaltige mineralische Bindemittel wird als Treibmittel verwendet.

Alternativ kann auch mineralischer Staub mit einem Treibmittel gemischt werden, wobei das Treibmittel mit mineralischem Bindemittel, welches vorzugsweise Wasser enthält, vermengt ist. Als Treibmittel kann beispielsweise CaCO₃ Verwendung finden. Der Blähvorgang kann in diesem Fall analog zum oben geschilderten vor sich gehen: Der mineralische Staub, welcher eine relativ kleine Sandkorngröße (beispielsweise 20 µm Durchmesser) aufweist, bildet mit dem Treibmittel und dem mineralischen Bindemittel größere Körner (beispielsweise 500 µm Durchmesser). Bei Erreichen einer kritischen Temperatur werden die Oberflächen der Sandkörner des mineralischen Staubs plastisch und bilden eine geschlossene Oberfläche der größeren Körner bzw. verschmelzen zu einer solchen. Die geschlossenen Oberflächen der größeren Körner sind nach wie vor plastisch und können nun vom Treibmittel gebläht werden. Falls das mineralische Bindemittel wasserhaltig ist, kann dieses als zusätzliches Treibmittel fungieren. Daher ist es bei einer bevorzugten Ausführungsform des erfindungsgemäßen Verfahrens vorgesehen, dass es sich bei dem mineralischem Material mit Treibmittel um mineralisches Material handelt, in dem Wasser gebunden ist und als Treibmittel wirkt, oder um mineralischen Staub gemischt mit wasserhaltigem mineralischen Bindemittel, welches als Treibmittel wirkt, oder um mineralischen Staub gemischt mit einem Treibmittel, welches mit mineralischem Bindemittel vermengt ist, wobei das mineralische Bindemittel vorzugsweise Wasser beinhaltet und als zusätzliches Treibmittel wirkt.

Um das dargestellte Verfahren durchführen zu können, ist neben einem Schachtofen mit mehreren Heizzonen mit regelbaren Heizelementen vor allem eine intelligente Regel- und Steuereinheit notwendig. Diese wertet beispielsweise Daten von Temperatursensoren aus, um den Temperatursturz des Materials und die entsprechende Position bzw. den Bereich im Ofenschacht festzustellen bzw. zu detektieren. Basierend auf dieser Detektion regelt die Regel- und Steuereinheit die Heizelemente der Heizzonen, insbesondere entlang der verbleibenden Fallstrecke. Es versteht sich jedoch, dass auch die Heizelemente der Heizzonen entlang der Fallstrecke vor der Blähposition bzw. dem Blähbereich geregelt und somit unterschiedlichste Temperaturprofile bis zur Blähung eingestellt werden können. Daher zeichnet sich eine erfindungsgemäße Vorrichtung zur Herstellung eines geblähten Granulats, umfassend einen senkrecht stehenden Ofen samt Ofenschacht mit einer Aufgabeöffnung am oberen Ende des Ofenschachts zur Aufgabe eines sandkornförmigen Materials und einer Austrageöffnung am unteren Ende des Ofenschachts sowie einer zwischen Aufgabe- und Austrageöffnung im Ofenschacht befindlichen Fallstrecke, welche durch mehrere, vertikal voneinander getrennt angeordnete Heizzonen führt, wobei die Heizzonen jeweils zumindest ein voneinander unabhängig steuerbares Heizelement aufweisen, um das Material auf eine kritische Temperatur zu erhitzen, sowie umfassend mehrere Temperatursensoren zur direkten oder indirekten Messung der Materialtemperatur und/oder Mittel zur Bestimmung der Leistung der Heizelemente der Heizzonen, dadurch aus, dass eine Regel- und Steuereinheit vorgesehen ist, die mit den Temperatursensoren und/oder den Mitteln zur Bestimmung der Leistung der Heizelemente der Heizzonen und mit den Heizelementen der Heizzonen verbunden ist, um eine erste Verringerung der Temperatur des Materials, bevorzugt von mindestens 100° C, zwischen zwei aufeinander folgenden Positionen entlang der Fallstrecke zu detektieren, und dass die Heizelemente durch die Regel- und Steuereinheit in Abhängigkeit von der kritischen Temperatur regelbar sind, insbesondere um eine Zunahme der Materialtemperatur entlang der verbleibenden Fallstrecke auf oder über die kritische Temperatur zu verhindern oder gezielt zu ermöglichen. Bei den Mitteln zur Bestimmung der Leistung bzw. der Leistungsaufnahme der Heizelemente kann es sich beispielsweise im Falle von elektrischen Heizelementen um Strom-/Spannungs- bzw. Leistungsmessgeräte handeln.

Durch die Detektion des Temperatursturzes kann der für das Blähen aufgewendete Energieeintrag gezielt minimiert werden. Ebenso kann die Produktqualität eines geschlossenzelligen, festen Granulats annähernd unabhängig vom Ausgangsmaterial gewährleistet werden. Gegenüber dem Stand der Technik können auch kleine und kleinste Sandkornfraktionen geschlossenzellig gebläht werden. Da feine, geblähte Granulate höhere Festigkeitswerte aufweisen als vergleichsweise große Granulate, lassen sich so interessante neue Leichtstoffe für die weiterverarbeitende Industrie realisieren.

Zur Detektion des Temperatursturzes kann an mehreren Stellen entlang der Fallstrecke die Temperatur des Materials gemessen werden. Die Temperaturmessung kann direkt oder indirekt erfolgen. Eine direkte Messung wäre durch Temperatursensoren, die im Ofeninneren angeordnet sind gegeben. Dabei können die Temperatursensoren mit dem Material in Berührung kommen oder auch nicht. In letzterem Fall wird lediglich die Temperatur in den Heizzonen bestimmt. Wichtig ist, dass die Temperatursensoren an vertikal zueinander beabstandeten Positionen über die Fallstrecke verteilt angeordnet sind, um eine Eingrenzung des örtlichen Auftretens des Temperatursturzes zu ermöglichen. Entsprechend ist es bei einer bevorzugten Ausführungsform des erfindungsgemäßen Verfahrens vorgesehen, dass die Temperatur des Materials im Ofenschacht an mehreren vertikal voneinander beabstandeten Positionen direkt oder indirekt gemessen wird, um eine erste Verringerung der Temperatur des Materials, bevorzugt von mindestens 100° C, zwischen zwei aufeinander folgenden Positionen entlang der Fallstrecke zu detektieren.

Vor allem in diesem Fall, ist es für die Bestimmung der Position bzw. des örtlichen Bereiches des Temperatursturzes entlang der Fallstrecke von Vorteil, wenn in jeder Heizzone zumindest ein Temperatursensor angeordnet ist, der die dort vorherrschende Temperatur misst. Entsprechend ist es bei einer bevorzugten Ausführungsform der erfindungsgemäßen Vorrichtung vorgesehen, dass in jeder Heizzone zumindest ein Temperatursensor angeordnet ist. Dies impliziert natürlich, dass Temperatursensoren, die vertikal zueinander beabstandet sind, vorgesehen sind. Im Falle einer direkten Temperaturmessung können die Temperatursensoren im Ofenschacht bzw. entlang der Fallstrecke angeordnet sein und sogar mit dem Material in Berührung kommen.

Die Detektion des Temperatursturzes kann ebenso über die Bestimmung der Wärmeflussänderung von einer Heizzone zur anderen erfolgen. Hierbei ist der Wärmefluss von den Heizelementen zum Material gemeint. Dieser hängt von der Temperaturdifferenz zwischen den Heizelementen und dem Material ab. Während des Aufheizens des Materials verringert sich die Temperaturdifferenz zwischen Heizelementen und Material sukzessive. Entsprechend verringert sich der Wärmefluss, d.h. die festgestellte Änderung des Wärmeflusses von einer Heizzone zur nächsten ist zunächst eine Abnahme. Unmittelbar nach dem Blähvorgang und dem damit einhergehenden Temperatursturz ist die Temperaturdifferenz zwischen Material und Heizelementen deutlich größer als unmittelbar vor dem Blähvorgang. Entsprechend nimmt auch der Wärmefluss zu, d.h. die festgestellte Änderung des Wärmeflusses von einer Heizzone zur nächsten ist nun eine Zunahme. Diese detektierte Zunahme des Wärmeflusses eignet sich daher, um den Temperatursturz und dessen Bereich im Ofenschacht festzustellen. Entsprechend ist es bei einer bevorzugten Ausführungsform des erfindungsgemäßen Verfahrens vorgesehen, dass die Änderung des Wärmeflusses von den Heizelementen zum Material bestimmt wird, wobei die Änderung zwischen einer Heizzone und einer nächsten, vorzugsweise der darauf folgenden Heizzone bestimmt wird, und die Detektion der ersten Verringerung der Temperatur des Materials zwischen zwei aufeinander folgenden Positionen entlang der Fallstrecke durch Detektieren einer Wärmeflusszunahme von einer Heizzone zur nächsten, vorzugsweise zur darauf folgenden Heizzone erfolgt. Konkret erfolgt die Bestimmung der Wärmeflussänderung bzw. die Detektion der Wärmeflusszunahme über die Messung der von den Heizelementen aufgenommenen Leistung bei einer vorgegebenen zu erreichenden Solltemperatur. Nach dem Temperatursturz ist die Differenz zwischen Solltemperatur und Materialtemperatur größer als unmittelbar vor dem Blähvorgang, weshalb die Heizelemente in der Heizzone, in der der Temperatursturz erfolgt und/oder die auf den Bereich des Temperatursturzes folgt, im Vergleich zu den Heizelementen der vorhergehenden Heizzone mehr Leistung aufnehmen. Diese Leistungszunahme entspricht der Zunahme des Wärmeflusses.

Auf die beschriebene Weise kann ein geschlossenzelliges Granulat erzeugt werden, das keinerlei bzw. kaum Hygroskopie aufweist und nicht brennbar ist. Die Granulatkörner können mit unterschiedlicher Oberflächenstruktur hergestellt werden. Dabei kann die konkrete Oberflächenstruktur der Granulatkörner zwischen einer einfachen Kugelform und einer Form von mehreren miteinander verbundenen Entitäten, ähnlich zu mehreren miteinander verbundenen Seifenblasen bzw. mitunter an eine Brombeere erinnernd, eingestellt werden.

Die Oberflächenstruktur, die unmittelbare Auswirkung auf die Rauigkeit des Granulats und damit auf dessen Verarbeitbarkeit mit anderen Materialien hat, lässt sich u.a. durch die thermische Behandlung nach dem Blähvorgang beeinflussen. Hierzu wird die Heizleistung der Heizelemente in den Heizzonen in der nach dem Blähvorgang verbleibenden Fallstrecke sukzessive verringert oder schlagartig komplett auf Null gesetzt. Dadurch wird den geblähten Körnern, die noch eine gewisse Plastizität aufweisen, mehr oder weniger Gelegenheit gegeben, sich im Ofenschacht miteinander zu verbinden. Versuche mit Perlit haben für den Fall einer sofortigen Unterbindung jeglicher weiterer Wärmezufuhr eine bevorzugte Oberflächenstruktur bestehend aus 5 bis 7 miteinander verbundenen Entitäten ergeben. Daher ist es bei einer bevorzugten Variante des erfindungsgemäßen Verfahrens vorgesehen, dass die Leistung der Heizelemente entlang der gesamten verbleibenden Fallstrecke auf Null gesetzt wird.

Aufgrund der hohen Prozesstemperatur sind im Ofenschacht, der wie ein Kamin wirkt, Auftriebskräfte vorhanden, die sich besonders auf kleinere Sandkornpartikel auswirken. Entsprechend bewirken die Auftriebskräfte bei kleineren und damit leichteren Sandkornpartikel eine längere Verweilzeit im Ofenschacht als bei größeren und schwereren Sandkörnern. Dies bedeutet, dass die kleineren, leichteren Sandkörner im Ofenschacht überhitzen können, was beispielsweise die mechanischen Eigenschaften dieser geblähten Sandkörner verschlechtert. Um das längere Verweilen von kleineren, leichteren Sandkörnern gegenüber größeren, schwereren Sandkörnern im Ofenschacht zu verhindern, wird der Ofenschacht mit leichtem Unterdruck betrieben. Dies bewirkt, dass mit dem Material von oben nach unten Prozessluft durch den Ofenschacht gesaugt wird und die Verweilzeit von großen, schweren und kleinen, leichten Sandkörnern angeglichen wird. Daher ist es bei einer bevorzugten Ausführungsform des erfindungsgemäßen Verfahrens vorgesehen, dass das Material zusammen mit einer ersten Prozessluft durch den Ofenschacht, vorzugsweise durch Beaufschlagung des Ofenschachts mit Unterdruck, gesaugt wird.

Die durch den Ofenschacht von oben nach unten strömende erste Prozessluft erfährt dabei eine Erwärmung. Dies führt zu einer Erhöhung der Strömungsgeschwindigkeit im Ofenschacht, wodurch die Verweilzeit aller Sandpartikel im Ofenschacht verkürzt wird. Dies ist nicht erwünscht. Um die Zunahme der Strömungsgeschwindigkeit der ersten Prozessluft zu kompensieren, ist der Ofenschacht nach unten hin weiter ausgeführt als oben. Solcherart kann die Strömungsgeschwindigkeit im Ofenschacht annähernd konstant gehalten werden. Daher ist es bei einer besonders bevorzugten Ausführungsform des erfindungsgemäßen Verfahrens vorgesehen, dass die erste Prozessluft mit im Wesentlichen konstanter Geschwindigkeit durch den Ofenschacht strömt.

Entsprechend ist es bei einer bevorzugten Ausführungsform der erfindungsgemäßen Vorrichtung vorgesehen, dass der Querschnitt des Ofenschachts normal zur Fallstrecke von der Aufgabe- zur Austrageöffnung zunimmt. Die Zunahme der Weite des Ofenschachts kann stufenweise oder kontinuierlich erfolgen. Für letzteren Fall bietet sich aufgrund der relativ einfachen Herstellung eines solchen Ofenschachts insbesondere eine konische Ausführung an. Daher ist es bei einer besonders bevorzugten Ausführungsform der erfindungsgemäßen Vorrichtung vorgesehen, dass der Querschnitt des Ofenschachts parallel zur Fallstrecke eine konische Form aufweist.

In Verbindung mit der Beaufschlagung des Ofenschachts mit Unterdruck kann somit eine im Wesentlichen konstante Geschwindigkeit der durch den Ofenschacht strömenden ersten Prozessluft gewährleistet werden. Daher ist es bei einer bevorzugten Ausführungsform der erfindungsgemäßen Vorrichtung vorgesehen, dass Mittel zur Erzeugung eines Unterdrucks im Ofenschacht entlang der Fallstrecke in einer Fallrichtung, die parallel zur Fallstrecke ist und von der Aufgabe- zur Austrageöffnung weist, vorgesehen sind, um eine erste Prozessluft mit im Wesentlichen konstanter Geschwindigkeit durch den Ofenschacht zu saugen. Ein solches Mittel wäre z.B. eine entsprechend dimensionierte Vakuumpumpe. Diese kann gleichzeitig für den Betrieb einer Flugstromförderung zum Abtransport des geblähten Granulats nach dessen Austragung aus dem Ofen benutzt werden. Die Erzeugung des Unterdrucks in Fallrichtung bedeutet, dass der Unterdruck in Fallrichtung zunimmt.

Die Geschwindigkeit, mit der die Sandkörner durch den Ofenschacht fallen, nimmt zunächst gemäß dem Fallgesetz zu. Wegen der geringen Größe der ungeblähten Sandkörner und deren relativ hoher Dichte spielt die Abbremsung aufgrund des Luftwiderstands nur eine untergeordnete Rolle. Daher erreichen die ungeblähten Sandkörner nicht nur eine Geschwindigkeit, die größer ist als die Strömungsgeschwindigkeit der ersten Prozessluft, sondern werden gemäß dem Fallgesetz weiter beschleunigt. Durch die Blähung nimmt das Volumen der Sandkörner schlagartig zu, und es verringert sich ihre Dichte. Der Luftwiderstand nimmt daher ebenfalls schlagartig zu und die geblähten Sandkörner werden von der ersten Prozessluft stark abgebremst. Hierauf fallen die Sandkörner mit einer im Wesentlichen konstanten Geschwindigkeit durch den Ofenschacht, deren Konstanz durch die Konstanz der Strömungsgeschwindigkeit der ersten Prozessluft bestimmt ist. Der Absolutwert dieser Fallgeschwindigkeit hängt vom Durchmesser bzw. Volumen und der Dichte der geblähten Sandkörner ab und wird im Allgemeinen größer sein als die Strömungsgeschwindigkeit der ersten Prozessluft. D.h. die Fallgeschwindigkeit der geblähten Körner ergibt sich durch das Wechselspiel zwischen Fallgesetz und dem Widerstand der mit im Wesentlichen konstanter Geschwindigkeit durch den Ofenschacht strömenden ersten Prozessluft, wobei der Luftwiderstand die dominierende Rolle innehat. Daher ist es bei einer besonders bevorzugten Ausführungsform des erfindungsgemäßen Verfahrens vorgesehen, dass das geblähte Material mit im Wesentlichen konstanter Geschwindigkeit fällt, wobei die Fallgeschwindigkeit der geblähten Sandkörner von deren Durchmesser abhängt. Entsprechend stellt sich in Abhängigkeit des Durchmessers (und der Dichte) der Sandkörner eine maximale Verweilzeit der Sandkörner im Ofenschacht ein, die nicht überschritten wird.

Zur Vermeidung von wesentlichen Emissionen erfolgt die Wärmezufuhr im Ofenschacht durch Wärmestrahlung. Gemäß dem Stand der Technik werden bei der Heizung mittels Wärmestrahlung als Schachtmaterial hitzebeständige Stähle verwendet, die jedoch hohe Wärmespeichermassen darstellen. Entsprechend ziehen solche Ausführungen lange An- und Abfahrzeiten der Anlage nach sich. Um dies zu vermeiden, ist der Ofenschacht aus hitzebeständigem Gewebe oder hoch hitzebeständigem Glas ausgeführt bzw. mit einem solchen ausgekleidet. Entsprechend ist es bei einer bevorzugten Ausführungsform der erfindungsgemäßen Vorrichtung vorgesehen, dass der Ofenschacht eine innere Oberfläche aufweist, welche mit hitzebeständigem Gewebe oder Glassegmenten ausgekleidet ist.

Vom radialen Zentrum des Ofenschachts mit Blickrichtung nach außen gesehen sind hinter der Auskleidung der inneren Oberfläche des Ofenschachts die Heizelemente angeordnet und hinter den Heizelementen eine Wärmeisolierung.

Unabhängig von den oben beschriebenen Maßnahmen zur Vergleichmäßigung der Strömungsgeschwindigkeit der ersten Prozessluft und damit letztlich der Verweildauer des Materials im Ofenschacht, ist es grundsätzlich natürlich so, dass kleine, leichte Sandpartikel schneller die Blähtemperatur erreichen als große, schwere. Vor allem für diese kleineren Sandpartikel besteht daher die Gefahr einer Überhitzung. Kommt es nun zu einer Kollision mit dem Ofenschacht, führt dies zum Anbacken an selbigem. Um solchen Kollisionen und potentiellem Anbacken entgegen zu wirken, ist das hitzebeständige Gewebe luftdurchlässig ausgeführt, sodass aus dem Raum zwischen Wärmeisolierung und Ofenschacht, in dem auch die Heizelemente installiert sind, eine zweite Prozessluft in den Ofenschacht, in Richtung des radialen Zentrums des Ofenschachts eingeblasen werden kann. Die Luftmenge wird dabei durch ein entsprechendes Drosselorgan, vorzugsweise ein regelbares Ventil, eingestellt. Bei der Ausführung des Ofenschachts mit hitzebeständigem Glas wird ein ähnlicher Effekt durch die Unterteilung des Glases in Segmente erreicht, wobei sich zwischen Glassegmenten ein Spalt befinden kann, aus welchem die zweite Prozessluft vom oben genannten Zwischenraum in den Ofenschacht eingeblasen werden kann. Daher ist es bei einer besonders bevorzugten Ausführungsform des erfindungsgemäßen Verfahrens vorgesehen, dass eine mittels mindestens eines Drosselorgans regulierte Menge an zweiter Prozessluft von einer inneren Oberfläche des Ofenschachts in Richtung zum radialen Zentrum des Ofenschachts geblasen wird, um ein Anbacken des Materials an der inneren Oberfläche des Ofenschachts zu verhindern.

Ebenso ist es bei einer bevorzugten Ausführungsform der erfindungsgemäßen Vorrichtung vorgesehen, dass das hitzebeständige Gewebe luftdurchlässig ist und durch das luftdurchlässige, hitzebeständige Gewebe eine zweite Prozessluft in Richtung zum radialen Zentrum des Ofenschachts einblasbar ist. Entsprechend ist es bei einer alternativen Ausführungsform der erfindungsgemäßen Vorrichtung vorgesehen, dass zwischen Glassegmenten Spalte angeordnet sind und durch die Spalte eine zweite Prozessluft in Richtung zum radialen Zentrum des Ofenschachts einblasbar ist, um ein Anbacken des Materials an der inneren Oberfläche des Ofenschachts zu verhindern. Weiters ist bei einer besonders bevorzugten Ausführungsform der erfindungsgemäßen Vorrichtung mindestens ein Drosselorgan vorgesehen, womit die Menge an einzublasender zweiter Prozessluft einstellbar ist. Vorzugsweise handelt es sich bei dem Drosselorgan um ein regelbares Ventil.

Wie bereits erwähnt, ist die Einstellung eines passenden Anteils an gebundenem Wasser oder einem anderen Treibmittel notwendig, um einerseits ein Blähen zu garantieren und andererseits ein Zerreißen der Körner beim Blähen auszuschließen. Im Labor kann der Feuchtegehalt des Rohsands und dessen Gewichtsabnahme beim Trocknen zunächst eruiert werden. Dies dient als Vorgabe für die Rohsandkonditionierung während des Produktionsprozesses. D.h. aufgrund der Laborversuche weiß man, wie lange man den Rohsand bei welcher Temperatur vor der Einbringung in den Ofenschacht trocknen muss, um den gewünschten Wassergehalt einzustellen. Dieses Vortrocknen bzw. thermische Vorkonditioniern erfolgt üblicherweise in einem Rohrofen, kann aber auch in einem Fließbettofen durchgeführt werden. Daher sieht eine besonders bevorzugte Ausführungsform des erfindungsgemäßen Verfahrens vor, dass das Material vor Eintritt in den Ofenschacht, vorzugsweise in einem Fließbettofen, thermisch vorkonditioniert wird. Es versteht sich, dass dieses thermische Vorkonditionieren bei einer Temperatur geschieht, die deutlich unter der kritischen Temperatur im Ofenschacht liegt.

Die thermische Nachbehandlung setzt voraus, dass im Wesentlichen alle Sandkörner bereits im geblähten Zustand vorliegen. Hierfür muss sichergestellt werden, dass das Blähen des Materials in einem möglichst definierten bzw. engen vertikalen Raumbereich des Ofenschachts stattfindet. Dafür wiederum müssen die Sandkörner möglichst gleich groß sein, sodass alle im Wesentlichen zur selben Zeit, nach demselben Energieeintrag plastisch werden und blähen. Daher sieht eine bevorzugte Ausführungsform des erfindungsgemäßen Verfahrens vor, dass das Material vor Eintritt in den Ofenschacht gesiebt wird, um eine möglichst homogene Größenverteilung der Sandkörner im Ofenschacht sicherzustellen.

Wie bereits oben erwähnt, hat die thermische Behandlung des Materials nach dem Blähvorgang Auswirkungen auf die Oberflächenbeschaffenheit, insbesondere auf die Rauigkeit des geblähten Granulats. Entsprechend der weiteren Verwendung des Granulats - z.B. bei der Verarbeitung zu Platten - ist es wichtig, die Oberfläche des geblähten Materials rau zu gestalten. Auf diese Weise können die einzelnen Granulatkörner mit Hilfe eines geeigneten Bindemittels, wie z.B. Wasserglas, miteinander verklebt werden, um so beispielsweise formstabile Platten mit geforderten Festigkeitswerten herstellen zu können. Solche Platten eignen sich u.a. für den Innentrockenausbau von Wohnräumen mit hohen wärmedämmenden Eigenschaften, wodurch z.B. eine Energieeinsparung bei der Verwendung von Klimaanlagen im Sommerbetrieb erzielt wird.

Die Verwendung von Wasserglas als Bindemittel ermöglicht es auch, eine Schicht des erfindungsgemäß hergestellten Granulats auf konventionelle Polystyrolplatten aufzubringen, die der Brandhemmung dient. Es versteht sich, dass solche brandhemmenden Schichten bzw. Brandschutzschichten auch auf einer Vielzahl von anderen Teilen, wie z.B. Stahlträgern, aufgebracht werden können.

Die Oberfläche des geblähten Materials lässt sich durch ein Verfestigen bzw. Glasieren der geblähten Körner in einem kalten Luftstrom beeinflussen. Zu diesem Zweck wird direkt nach dem Blähschacht dem vorhandenen Gemisch aus Prozessluft und geblähtem Material Kühlluft derart beigemengt, dass eine Abkühlung auf unter 100° C, vorzugsweise auf unter 80° C erfolgt. Daher ist es bei einer bevorzugten Ausführungsform des erfindungsgemäßen Verfahrens vorgesehen, dass beim Austragen des Materials aus dem Ofen bzw. Ofenschacht Kühlluft beigemengt wird, um das Material auf unter 100° C, vorzugsweise auf unter 80° C abzukühlen. Entsprechend ist es bei einer bevorzugten Ausführungsform der erfindungsgemäßen Vorrichtung vorgesehen, dass im Bereich des unteren Endes des Ofens bzw. Ofenschachts Mittel zur Beimengung von Kühlluft beim Austragen des Materials aus dem Ofen bzw. Ofenschacht vorgesehen sind. Bei diesen Mitteln handelt es sich vorzugsweise um eine Ausströmöffnung für die Kühlluft, die unmittelbar beim unteren Ende des Ofenschachts angeordnet ist, sowie um ein Kühlluftventil, welches insbesondere regelbar ausgeführt ist.

Optional bzw. zusätzlich kann zur Austragung des Materials eine wassergekühlte Schurre verwendet werden, wobei die Wasserkühlung zur weiteren Kühlung des Materials beiträgt, wodurch dessen plastische Verformbarkeit weiter reduziert wird. Entsprechend ist es bei einer besonders bevorzugten Ausführungsform der erfindungsgemäßen Vorrichtung vorgesehen, dass eine, vorzugsweise wassergekühlte Schurre vorgesehen ist, um das Material aus dem Ofen bzw. Ofenschacht auszutragen.

Das so abgekühlte Granulat wird in einem weiteren Schritt mit Hilfe einer pneumatischen Flugstromförderung transportiert und weiter abgekühlt, womit Oberflächenbeschaffenheit bzw. Festigkeit des Granulats ebenfalls beeinflusst wird. Daher sieht eine weitere bevorzugte Ausführungsform des erfindungsgemäßen Verfahrens vor, dass das Material nach dem Austragen mittels einer pneumatischen Flugstromförderung in einen Bevorratungsbehälter befördert wird, wobei hierbei ein kühles Fluid, bevorzugt kühle Luft, zum Einsatz kommt, wodurch das Material weiter abgekühlt wird und im Bevorratungsbehälter vorzugsweise Raumtemperatur aufweist. Letzteres gestattet ein problemloses Hantieren, z.B. Absacken, des erzeugten Granulats. Analog ist es bei einer besonders bevorzugten Ausführungsform der erfindungsgemäßen Vorrichtung vorgesehen, dass eine pneumatische Flugstromförderung zur Beförderung des aus dem Ofen bzw. Ofenschacht ausgetragenen Materials in einen Bevorratungsbehälter vorgesehen ist.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Schnittansicht eines Schachtofens zum Blähen von Perlitsand gemäß dem Stand der Technik
- Fig. 2: eine schematische Schnittansicht eines weiteren aus dem Stand der Technik bekannten Schachtofens zum Blähen von Partikeln
- Fig. 3: eine schematische Schnittansicht eines erfindungsgemäßen Schachtofens zum erfindungsgemäßen geschlossenzelligen Blähen, wobei das sich im Ofen befindende Material ebenfalls schematisch skizziert ist
- Fig. 4: eine schematische Darstellung eines geschlossenzelligen, geblähten Granulats mit kugelförmiger Oberflächenstruktur in Aufsicht
- Fig. 5: eine schematische Darstellung eines geschlossenzelligen, geblähten Granulats mit rauer Oberflächenstruktur in Aufsicht
- Fig. 6: ein Gesamtfließschema eines erfindungsgemäßen Verfahrens

### WEGE ZUR AUSFÜHRUNG DER ERFINDUNG

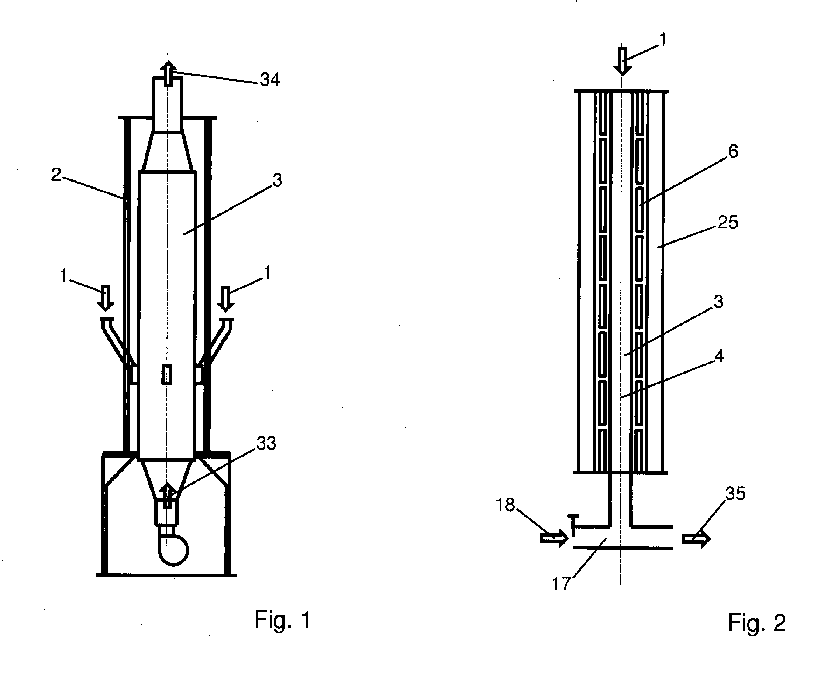

Fig. 1 zeigt eine schematische Schnittansicht eines aus dem Stand der Technik bekannten Ofens 2 zum Aufschäumen bzw. Blähen von Perlitsand 1. Der Ofen 2 besteht im Wesentlichen aus einem senkrecht stehenden Ofenschacht 3, in welchen von unten Heißgas 33 eingeblasen wird. Perlitsand 1 wird von oben, in der in Fig. 1 dargestellten Ausführungsform von ca. einem Drittel der Gesamthöhe des Ofenschachts 3, eingebracht. Aufgrund des Heißgases 33 werden die Sandkörner 15 (in Fig. 1 nicht eingezeichnet) des Perlitsands 1 gebläht, wodurch sich deren Dichte verringert. Dies wiederum bewirkt, dass die geblähten Sandkörner 15 im Ofenschacht 3 aufsteigen. Am oberen Ende des Ofenschachts 3 entweicht das heiße Abgas 34 mit dem expandierten Granulat. Über einen Filter (nicht dargestellt) kann das geblähte Granulat abgeschieden werden. Nachteilig an diesem Verfahren ist, dass die Sandkörner 15 beim Blähvorgang üblicherweise aufreißen und daher höchst hygroskop sind.

Fig. 2 zeigt eine schematische Schnittansicht eines Ofens 2, wie er aus der WO 2009/009817 A1 bekannt ist. Auch dieser Ofen 2 weist einen senkrecht stehenden Ofenschacht 3 auf. In diesem Fall wird der Perlitsand 1 von oben durch den Ofenschacht 3 fallen gelassen, d.h. der Perlitsand 1 fällt entlang einer Fallstrecke 4, die durch den Ofenschacht 3 verläuft. Entlang der Fallstrecke 4 sind Heizelemente 6 angeordnet, die dem Perlitsand 1 Wärme zuführen, sodass es zu einer Blähung kommt. Nach außen ist der Ofen 2 bzw. sind die Heizelemente 6 mittels einer Wärmeisolierung 25 isoliert.

Das geblähte Granulat tritt am unteren Ende des Ofens 2 aus dem Ofenschacht 3 aus und fällt in eine Flugstromförderung 17. Hierbei wird das geblähte Granulat in einem im Wesentlichen horizontal ausgerichteten Rohr mittels einer starken Strömung kühler Luft 18, 35 abtransportiert. Zwar können mit dem in der Fig. 2 gezeigten Ofen unter gewissen Umständen geschlossenzellig geblähte Granulate erzeugt werden, aus der WO 2009/009817 A1 gehen jedoch keine Details über den Blähvorgang hervor.

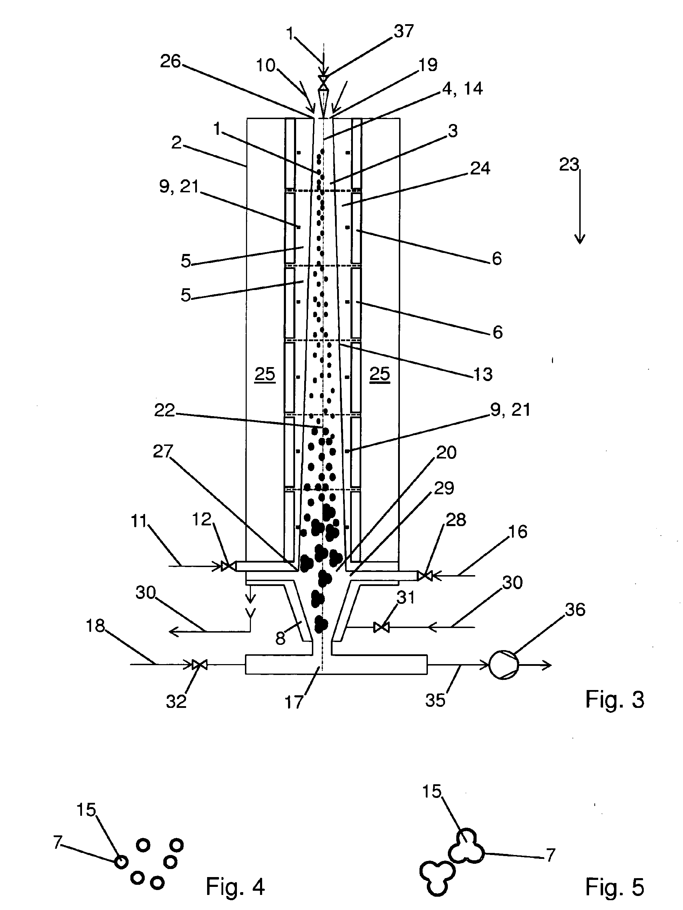

Fig. 3 zeigt einen erfindungsgemäßen Ofen 2, der sich für die Durchführung des erfindungsgemäßen Verfahrens zur geschlossenzelligen Blähung eines sandkornförmigen, mineralischen Materials, in dem Wasser oder ein anderes Treibmittel gebunden ist, eignet. Der Ofen 2 weist einen senkrecht verlaufenden Ofenschacht 3 auf, an dessen oberem Ende 26 eine Aufgabeöffnung 19 für das zu blähende Material, wie z.B. Perlitsand 1, angeordnet ist.

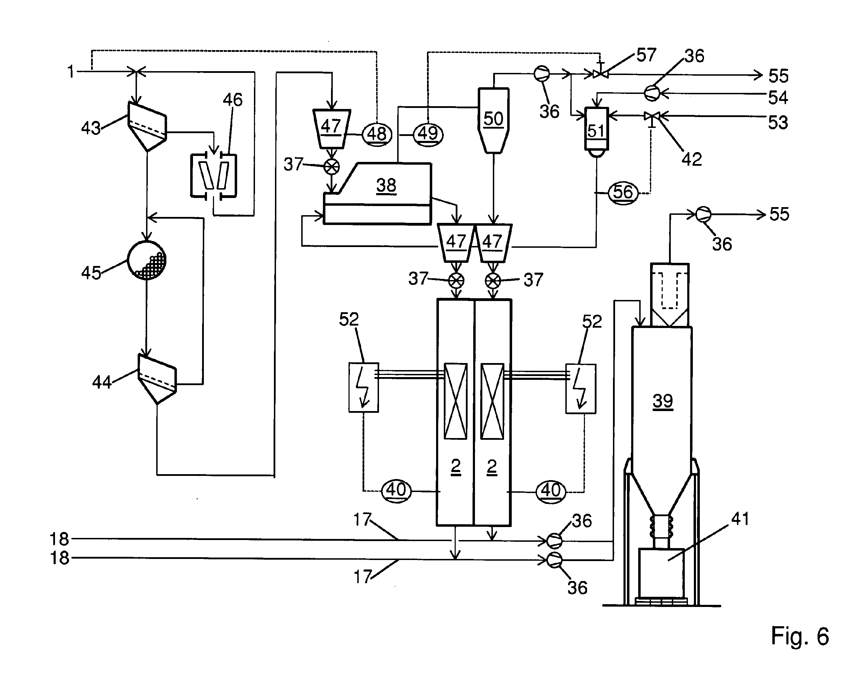

Dabei kann der Perlitsand 1 vor Zuführung zum Ofen 2 hinsichtlich des Anteils an gebundenem Wasser bzw. Treibmittel vorkonditioniert werden, beispielsweise in einem Fließbettofen 38 (vgl. Fig. 6). Die Aufgabe des Perlitsands 1 in den Ofen 2 bzw. Ofenschacht 3 kann über eine (nicht dargestellte) Schurre erfolgen bzw. kann die Aufgabe des Perlitsands 1 über ein Ventil 37 geregelt werden.

Der Perlitsand 1 fällt von der Aufgabeöffnung 19 entlang einer Fallstrecke 4 in einer Fallrichtung 23 senkrecht durch den Ofenschacht 3 zu einer Austrageöffnung 20 am unteren Ende 27 des Ofens 2 bzw. Ofenschachts 3.

Die Weite des Ofenschachts 3, d.h. der Querschnitt des Ofenschachts 3 normal auf die Fallrichtung 23, nimmt von der Aufgabeöffnung 19 zur Austrageöffnung 20 hin zu. Im gezeigten Ausführungsbeispiel erfolgt diese Aufweitung kontinuierlich, sodass der Querschnitt des Ofenschachts 3 parallel zur Fallrichtung 23 eine konische Form aufweist. Dabei kann der Querschnitt des Ofenschachts 3 normal auf die Fallrichtung 23 eine rechteckige bzw. quadratische Form oder runde bzw. kreisförmige Form aufweisen.

Der Ofen 2 ist in Fallrichtung 23 in Heizzonen 5 (in Fig. 3 durch die strichlierten Linien angedeutet) mit jeweils mindestens einem Heizelement 6 unterteilt, um den durch den Ofenschacht 3 fallenden Perlitsand 1 aufzuheizen. Im gezeigten Ausführungsbeispiel sind die Heizelemente 6 symmetrisch bezüglich einer Ebene angeordnet, die durch das radiale Zentrum 14 des Ofenschachts 3 verläuft. Bei den Heizelementen 6 kann es sich sowohl um elektrische Heizelemente 6 als auch um gasbetriebene Heizelemente 6 handeln. Entscheidend ist, dass die Heizelemente 6 zur Abgabe von Wärmestrahlung ausgelegt sind. D.h. die Übertragung von Wärme auf den Perlitsand 1 erfolgt in erster Linie mittels Wärmestrahlung und nicht etwa durch Konvektion.

In Richtung des radialen Zentrums 14 des Ofens 2 gesehen ist nach den Heizelemente 6 hitzebeständiges Gewebe 24 angeordnet. Der Ofenschacht 3 weist daher eine innere Oberfläche 13 auf, die mit hitzebeständigem Gewebe 24 ausgekleidet ist, bzw. bildet das hitzebeständige Gewebe 24 die innere Oberfläche 13 des Ofenschachts 3. Das hitzebeständige Gewebe 24 hat gegenüber hitzebeständigen Stählen, die gemäß dem Stand der Technik üblicherweise verwendet werden, den Vorteil geringerer Wärmespeichermassen bzw. -kapazitäten, sodass rasche An- und Abfahrzeiten des Ofens 2 realisiert werden können.

Das hitzebeständige Gewebe 24 ist außerdem für Luft durchlässig. Daher kann eine zweite Prozessluft 11 durch das Gewebe 24 hindurch in Richtung radiales Zentrum des Ofenschachts 3 eingeblasen werden, um einem Anbacken von erhitzten Sandkörnern 15 an der inneren Oberfläche 13 des Ofenschachts 3 entgegen zu wirken. Die zweite Prozessluft 11 wird dabei in dem zwischen Ofenschacht 3 bzw. dessen innerer Oberfläche 13 und einer äußeren Wärmeisolierung 25 des Ofens 2 befindlichen Zwischenraum, in dem auch die Heizelemente 6 angeordnet sind, geleitet. Die Menge an zweiter Prozessluft 11 wird über ein Ventil 12, welches vorzugsweise regelbar ist, kontrolliert.

Im Gewebe 24 sind außerdem Temperatursensoren 21 angeordnet. Die Temperatursensoren 21 sind dabei an vertikal voneinander beabstandeten Positionen 9 angeordnet, sodass in jeder Heizzone 5 zumindest ein Temperatursensor 21 liegt. Im gezeigten Ausführungsbeispiel wird also die Temperatur des Perlitsands 1 über die in der Heizzone 5 vorherrschende Temperatur ermittelt.

Heizelemente 6 und Temperatursensoren 21 sind mit einer Regel- und Steuereinheit 40 (vgl. Fig. 6) verbunden, die die Position bzw. den Bereich 22 im Ofenschacht 3, an welcher bzw. in welchem die Blähung der Sandkörner 15 stattfindet, aufgrund der Temperaturdaten bestimmt. An dieser Position bzw. in diesem Bereich 22 tritt nämlich eine deutliche Verminderung der Temperatur, ein Temperatursturz von beispielsweise über 100° C des geblähten Perlitsands 1 auf. Dieser Temperatursturz ist Folge eines isenthalpen Blähvorgangs des Perlitsands 1, wobei der Blähvorgang zustande kommt durch ein Weichwerden der Oberfläche 7 der Sandkörner 15 gefolgt von einem Ausdehnungsvorgang aufgrund des sich in den Sandkörnern 15 bildenden Wasserdampfs bzw. Wasserdampfdrucks. Z.B. hat der Perlitsand 1 unmittelbar vor seiner Blähung ca. 780° C und unmittelbar nach dem isenthalpen Blähvorgang nur noch ca. 590° C, d.h. ein Temperatursturz von 190° C tritt in diesem Beispiel auf. Die Regel- und Steuereinheit regelt die Heizelemente 6, die in Fallrichtung 23 gesehen nach der Position bzw. dem Bereich 22 des Temperatorsturzes liegen, so, dass keine weitere bzw. nochmalige Erhöhung der Temperatur des (geblähten) Perlitsands 1 mehr erfolgt. Im einfachsten Fall wird die Leistung dieser Heizelemente 6 auf Null gesetzt.

Die thermische Behandlung der Sandkörner 15 nach dem Blähprozess hat Einfluss auf deren Oberflächenstruktur. Einerseits soll die Oberfläche im Sinne einer guten Festigkeit durch Abkühlung glasiert werden. Andererseits können unterschiedliche Rauigkeiten des geblähten Granulats erzielt werden, indem mehrere kleinere Sandkörner sich zu einem größeren verbinden. Fig. 4 zeigt den Fall, wo das ausgetragene, geblähte Material im Wesentlichen aus einzelnen Sandkörnern 15 mit einer kugelförmigen Oberfläche 7 besteht. Dem gegenüber zeigt Fig. 5 geblähtes Granulat mit größeren Sandkörnern 15, die eine raue Oberfläche 7 aufweisen.

Um den geblähten Perlitsand 1 rasch abkühlen zu können, wird beim Austragen aus dem Ofen 2 Kühlluft 16 eingeblasen, vgl. Fig. 3. Hierfür ist im Bereich der Austrageöffnung 20 eine Ausströmöffnung 29 für die Kühlluft 16 vorgesehen. Über ein, vorzugsweise regelbares Ventil 28 kann die Menge an Kühlluft 16 reguliert werden. Die Kühlluft bewirkt ein Abkühlen des geblähten Perlitsands 1 auf unter 100° C, vorzugsweise unter 80° C.

In Fallrichtung 23 gesehen nach der Austrageöffnung 20, unmittelbar an die Ausströmöffnung 29 für die Kühlluft 16 anschließend ist eine Schurre 8 angeordnet. Diese wird mit Kühlwasser 30 gekühlt, dessen Menge über ein, vorzugsweise regelbares Ventil 31 kontrolliert wird. Hierdurch wird der geblähte Perlitsand 1 weiter gekühlt.

Über die Schurre 8 gelangt der geblähte Perlitsand 1 schließlich in eine Flugstromförderung 17, mit welcher der Perlitsand 1 in einen Bevorratungsbehälter 39 (vgl. Fig. 6) befördert wird. Die Flugstromförderung 17 arbeitet mit kühler Luft 18, deren Menge mittels eines, vorzugsweise regelbaren Ventils 32 kontrolliert wird. Dabei wird die kühle Luft 18 bzw. die kühle Luft mit expandiertem Perlitsand 35 z.B. von einer Vakuumpumpe 36 angesaugt.

Die sich in der Flugstromförderung 17 rasch bewegende kühle Luft 18 bzw. kühle Luft mit expandiertem Perlitsand 35 erzeugt gegenüber dem Ofenschacht 3 einen Unterdruck. Dieser Unterdruck bewirkt, dass der Perlitsand 1 gemeinsam mit Prozessluft 10 von der Aufgabeöffnung 19 durch den Ofenschacht 3 gesaugt wird. Dies wiederum führt dazu, dass sich die geblähten Sandkörner 15 des Perlitsands 1 gemeinsam mit der ersten Prozessluft 10 mit einer möglichst konstanten und vorzugsweise derselben Geschwindigkeit durch den Ofenschacht 3 bewegen.

Darüber hinaus kann die Definition der Position bzw. des Bereichs 22 weiter verbessert werden, indem durch Siebung (nicht dargestellt) der Sandkörner 15 vor Eintritt in den Ofen 2 eine möglichst einheitliche Größe (und damit Masse) der Sandkörner 15 sichergestellt wird, sodass alle Sandkörner 15 möglichst nach derselben Dauer der thermischen Behandlung im Ofenschacht 3 blähen.

Fig. 6 zeigt ein Gesamtfließschema eines erfindungsgemäßen Verfahrens, in welchem ein erfindungsgemäßer Ofen 2 für das Blähen verwendet wird. Dabei wird der Perlitsand 1 zunächst von einer Materialaufgabe in ein grobes Sieb 43 geführt, welches viel zu große Körner, die beispielsweise einen größeren Durchmesser als 30 mm aufweisen, aussiebt. Diese viel zu großen Sandkörner 15 werden einem Backenbrecher 46 zugeführt, wonach die vom Backenbrecher 46 zerkleinerten Sandkörner 15 wieder in das grobe Sieb 43 gelangen.

Hat der Perlitsand 1 das grobe Sieb 43 passiert, gelangt er in eine Stabmühle, die einen einheitlich kleinen Durchmesser der Sandkörner 15 des Perlitsands 1 erzeugen soll, z.B. einen Durchmesser von 0,5 mm. Dieser kleine Durchmesser wird über ein im Anschluss an die Stabmühle 45 befindliches feines Sieb 44 kontrolliert. Zu große Körner werden wieder der Stabmühle 45 zugeführt.

Vom feinen Sieb 44 gelangt der Perlitsand 1 in einen Silo 47. Eine Füllstandregelung 48 überwacht den Füllstand in diesem Silo 47 und veranlasst bei zu geringem Füllstand Zufuhr von weiterem Perlitsand 1 zur Materialaufgabe. Über ein Ventil 37 wird der Perlitsand 1 vom Silo 47 einem Fließbettofen 38 zugeführt. Im Fließbettofen 38 erfolgt eine thermische Vorkonditionierung des Perlitsands 1, um den Wassergehalt bzw. den Gehalt an gebundenem Treibmittel einzustellen.

Die Heizung im Fließbettofen 38 erfolgt beispielsweise mittels Erdgas 53, welches in einem Brenner 51 gemeinsam mit Verbrennungsluft 54 verbrannt wird. Die Verbrennungsluft 54 wird dem Brenner beispielsweise über eine Vakuumpumpe 36 zugeführt. Die Menge an dem Brenner 51 zugeführtem Erdgas 53 wird über ein Ventil 42 kontrolliert, welches von einer Temperaturregelung 56, die die Temperatur des Brenners 51 regelt, angesteuert wird.

Die Abluft 55 aus dem Fließbettofen 38 wird über einen Zyklon 50 abgeführt, wobei die Abluft in weiterer Folge wieder dem Brenner 51, beispielsweise über eine weitere Vakuumpumpe 36, zugeführt werden oder durch ein Ventil 57 entweichen kann. Das Ventil 57 wird dabei von einer Druckregelung 49 angesteuert, welche den Druck im Fließbettofen 38 regelt. Vom Fließbettofen 38 gelangt der Perlitsand 1 in einen weiteren Silo 47, von wo er über ein Ventil 37 dem Ofen 2 zugeführt werden kann.

In Fig. 6 ist noch ein weiterer Ofen 2 gezeigt, der ebenfalls mit Perlitsand 1 beschickt wird. Hierbei handelt es sich um Perlitsand 1 der aus der Abluft 55 im Zyklon 50 abgeschieden und in einen weiteren Silo 47 gefördert wurde.

Im in Fig. 6 gezeigten Ausführungsbeispiel wird jeder Ofen 2 elektrisch beheizt, wobei die Heizelemente 6 (vgl. Fig. 3) mittels einer elektrischen Energieversorgungen 52 mit Energie versorgt werden. Die Energieversorgung 52 ist mit der Regel- und Steuereinheit 40 verbunden. Auf diese Weise kann die Leistung der Heizelemente 6 nicht nur geregelt werden, sondern über die Bestimmung der Leistungsaufnahme von aufeinanderfolgenden Heizelementen 6 kann die Position bzw. der Bereich 22 des Temperatursturzes (vgl. Fig. 3) bestimmt werden.

Der geblähte Perlitsand 1 wird nach der Austragung aus dem Ofen 2 über eine Flugstromförderung 17, die mit kühler Luft 18 arbeitet, welche wiederum von einer Vakuumpumpe 36 angesaugt wird, in einen Bevorratungsbehälter 39 befördert. Vom Bevorratungsbehälter 39 kann Abluft 55 mittels einer weiteren Vakuumpumpe 36 abgeführt werden.

Der Bevorratungsbehälters 39 ist im gezeigten Ausführungsbeispiel über einer Absackvorrichtung 41 angeordnet, mittels derer der geblähte Perlitsand in Säcke, beispielsweise in sogenannte Big Bags oder andere, vorzugsweise flexible Schüttgutbehälter, abgesackt bzw. abgepackt werden kann.

### BEZUGSZEICHENLISTE

- 1: Perlitsand
- 2: Ofen
- 3: Ofenschacht
- 4: Fallstrecke
- 5: Heizzone
- 6: Heizelement
- 7: Oberfläche eines Sandkorns
- 8: Schurre
- 9: Position für Temperaturmessung
- 10: Erste Prozessluft
- 11: Zweite Prozessluft
- 12: Ventil für zweite Prozessluft
- 13: innere Oberfläche des Ofenschachts
- 14: radiales Zentrum des Ofenschachts
- 15: Sandkorn
- 16: Kühlluft
- 17: Flugstromförderung
- 18: Kühle Luft für Flugstromförderung
- 19: Aufgabeöffnung
- 20: Austrageöffnung
- 21: Temperatursensor
- 22: Position bzw. Bereich des Temperatursturzes
- 23: Fallrichtung
- 24: Hitzebeständiges Gewebe
- 25: Wärmeisolierung
- 26: Oberes Ende des Ofens bzw. Ofenschachts
- 27: Unteres Ende des Ofens bzw. Ofenschachts
- 28: Ventil für die Kühlluft
- 29: Ausströmöffnung für die Kühlluft
- 30: Kühlwasser
- 31: Ventil für Kühlwasser
- 32: Ventil für kühle Luft der Flugstromförderung
- 33: Heißgas
- 34: Heißes Abgas mit expandiertem Perlitsand
- 35: Kühle Luft mit geblähtem Perlitsand
- 36: Vakuumpumpe
- 37: Ventil für Perlitsand
- 38: Fließbettofen
- 39: Bevorratungsbehälter
- 40: Regel- und Steuereinheit
- 41: Absackstation
- 42: Ventil für Erdgas
- 43: Grobes Sieb
- 44: Feines Sieb
- 45: Stabmühle
- 46: Backenbrecher
- 47: Silo
- 48: Füllstandregelung
- 49: Druckregelung
- 50: Zyklon
- 51: Brenner
- 52: Elektrische Energieversorgung
- 53: Erdgas
- 54: Verbrennungsluft
- 55: Abluft
- 56: Temperaturregelung
- 57: Ventil für Abluft

## Patentansprüche

1. Verfahren zur Herstellung eines geblähten Granulats aus sandkornförmigem, mineralischem Material (1) mit einem Treibmittel, beispielsweise eines geblähten Granulats aus Perlit- (1) oder Obsidiansand; wobei das Material (1) in einen senkrecht stehenden Ofen (2) von oben, bevorzugt über eine Schurre, aufgegeben wird; das Material (1) in einem Ofenschacht (3) des Ofens (2) entlang einer Fallstrecke (4) durch mehrere, vertikal voneinander getrennt angeordnete Heizzonen (5) fällt, wobei jede Heizzone (5) mit zumindest einem unabhängig steuerbaren Heizelement (6) beheizt werden kann; das Material (1) dabei auf eine kritische Temperatur erhitzt wird, bei welcher die Oberflächen (7) der Sandkörner (15) plastisch werden und die Sandkörner (15) aufgrund des Treibmittels gebläht werden; und das geblähte Material (1) am unteren Ende (27) des Ofens (2) ausgetragen wird, **dadurch gekennzeichnet, dass** bei Detektion einer ersten Verringerung der Temperatur des Materials (1) zwischen zwei aufeinander folgenden Positionen (9) entlang der Fallstrecke (4) die Heizelemente (6) entlang der verbleibenden Fallstrecke (4) in Abhängigkeit von der kritischen Temperatur geregelt werden, um eine Zunahme der Materialtemperatur entlang der verbleibenden Fallstrecke (4) auf oder über die kritische Temperatur zu verhindern oder gezielt zu ermöglichen.

2. Verfahren nach Anspruch 1, **dadurch gekennzeichnet, dass** die Heizelemente (6) entlang der verbleibenden Fallstrecke (4) so geregelt werden, dass sich die Materialtemperatur entlang der verbleibenden Fallstrecke (4) nicht auf oder über die kritische Temperatur erhöht.

3. Verfahren nach Anspruch 1, **dadurch gekennzeichnet, dass** die Heizelemente (6) entlang der verbleibenden Fallstrecke (4) so geregelt werden, dass sich die Materialtemperatur entlang der verbleibenden Fallstrecke (4) auf oder über die kritische Temperatur erhöht.

4. Verfahren nach einem der Ansprüche 1 bis 2, **dadurch gekennzeichnet, dass** die Leistung der Heizelemente (6) entlang der gesamten verbleibenden Fallstrecke (4) auf Null gesetzt wird.

5. Verfahren nach einem der Ansprüche 1 bis 4, **dadurch gekennzeichnet, dass**, es sich bei dem mineralischem Material (1) mit Treibmittel um mineralisches Material (1) handelt, in dem Wasser gebunden ist und als Treibmittel wirkt, oder um mineralischen Staub gemischt mit wasserhaltigem mineralischen Bindemittel, welches als Treibmittel wirkt, oder um mineralischen Staub gemischt mit einem Treibmittel, welches mit mineralischem Bindemittel vermengt ist, wobei das mineralische Bindemittel vorzugsweise Wasser beinhaltet und als zusätzliches Treibmittel wirkt.

6. Verfahren nach einem der Ansprüche 1 bis 5, **dadurch gekennzeichnet, dass** die Temperatur des Materials (1) im Ofenschacht (3) an mehreren vertikal voneinander beabstandeten Positionen (9) direkt oder indirekt gemessen wird, um eine erste Verringerung der Temperatur des Materials, bevorzugt von mindestens 100° C, zwischen zwei aufeinander folgenden Positionen (9) entlang der Fallstrecke (4) zu detektieren.

7. Verfahren nach einem der Ansprüche 1 bis 6, **dadurch gekennzeichnet, dass** die Änderung des Wärmeflusses von den Heizelementen (6) zum Material (1) bestimmt wird, wobei die Änderung zwischen einer Heizzone (5) und einer nächsten, vorzugsweise der darauf folgenden Heizzone (5) bestimmt wird, und die Detektion der ersten Verringerung der Temperatur des Materials (1) zwischen zwei aufeinander folgenden Positionen (9) entlang der Fallstrecke (4) durch Detektieren einer Wärmeflusszunahme von einer Heizzone (5) zur nächsten, vorzugsweise zur darauf folgenden Heizzone (5) erfolgt.

8. Verfahren nach einem der Ansprüche 1 bis 7, **dadurch gekennzeichnet, dass** das Material (1) zusammen mit einer ersten Prozessluft (10) durch den Ofenschacht (3), vorzugsweise durch Beaufschlagung des Ofenschachts (3) mit Unterdruck, gesaugt wird.

9. Verfahren nach Anspruch 8, **dadurch gekennzeichnet, dass** die erste Prozessluft (10) mit im Wesentlichen konstanter Geschwindigkeit durch den Ofenschacht (3) strömt.

10. Verfahren nach Anspruch 9, **dadurch gekennzeichnet, dass** das geblähte Material (1) mit im Wesentlichen konstanter Geschwindigkeit durch den Ofenschacht (3) fällt, wobei die Fallgeschwindigkeit der geblähten Sandkörner von deren Durchmesser abhängt.

11. Verfahren nach einem der Ansprüche 1 bis 10, **dadurch gekennzeichnet, dass** eine mittels mindestens eines Drosselorgans (12) regulierte Menge an zweiter Prozessluft (11) von einer inneren Oberfläche (13) des Ofenschachts (3) in Richtung zum radialen Zentrum (14) des Ofenschachts (3) geblasen wird, um ein Anbacken des Materials (1) an der inneren Oberfläche (13) des Ofenschachts (3) zu verhindern.

12. Verfahren nach einem der Ansprüche 1 bis 11, **dadurch gekennzeichnet, dass** das Material (1) vor Eintritt in den Ofenschacht (3), vorzugsweise in einem Fließbettofen (38), thermisch vorkonditioniert wird.

13. Verfahren nach einem der Ansprüche 1 bis 12, **dadurch gekennzeichnet, dass** das Material (1) vor Eintritt in den Ofenschacht (3) gesiebt wird, um eine möglichst homogene Größenverteilung der Sandkörner (15) im Ofenschacht (3) sicherzustellen.

14. Verfahren nach einem der Ansprüche 1 bis 13, **dadurch gekennzeichnet, dass** beim Austragen des Materials (1) aus dem Ofen (2) bzw. Ofenschacht (3) Kühlluft (16) beigemengt wird, um das Material (1) auf unter 100° C, vorzugsweise auf unter 80° C abzukühlen.

15. Verfahren nach einem der Ansprüche 1 bis 13, **dadurch gekennzeichnet, dass** das Material (1) nach dem Austragen mittels einer pneumatischen Flugstromförderung (17) in einen Bevorratungsbehälter (39) befördert wird, wobei hierbei ein kühles Fluid (18), bevorzugt kühle Luft (18), zum Einsatz kommt, wodurch das Material (1) abgekühlt wird und im Bevorratungsbehälter (39) vorzugsweise Raumtemperatur aufweist.

16. Vorrichtung zur Herstellung eines geblähten Granulats, umfassend einen senkrecht stehenden Ofen (2) samt Ofenschacht (3) mit einer Aufgabeöffnung (19) am oberen Ende (26) des Ofenschachts (3) zur Aufgabe eines sandkornförmigen Materials (1) und einer Austrageöffnung (20) am unteren Ende (27) des Ofenschachts (3) sowie einer zwischen Aufgabe- (19) und Austrageöffnung (20) im Ofenschacht (3) befindlichen Fallstrecke (4), welche durch mehrere, vertikal voneinander getrennt angeordnete Heizzonen (5) führt, wobei die Heizzonen (5) jeweils zumindest ein voneinander unabhängig steuerbares Heizelement (6) aufweisen, um das Material (1) auf eine kritische Temperatur zu erhitzten, sowie umfassend mehrere Temperatursensoren (21) zur direkten oder indirekten Messung der Materialtemperatur und/oder Mittel zur Bestimmung der Leistung der Heizelemente (6) der Heizzonen (5), **dadurch gekennzeichnet, dass** eine Regel- und Steuereinheit (40) vorgesehen ist, die mit den Temperatursensoren (21) und/oder den Mitteln zur Bestimmung der Leistung der Heizelemente (6) der Heizzonen (5) und mit den Heizelementen (6) der Heizzonen (5) verbunden ist, um eine erste Verringerung der Temperatur des Materials (1), bevorzugt von mindestens 100° C, zwischen zwei aufeinander folgenden Positionen (9) entlang der Fallstrecke (4) zu detektieren, und dass die Heizelemente (6) durch die Regel- und Steuereinheit (40) in Abhängigkeit von der kritischen Temperatur regelbar sind, um eine Zunahme der Materialtemperatur entlang der verbleibenden Fallstrecke (4) auf oder über die kritische Temperatur zu verhindern oder gezielt zu ermöglichen.

17. Vorrichtung nach Anspruch 16, **dadurch gekennzeichnet, dass** in jeder Heizzone (5) zumindest ein Temperatursensor (21) angeordnet ist.

18. Vorrichtung nach einem der Ansprüche 16 bis 17, **dadurch gekennzeichnet, dass** der Querschnitt des Ofenschachts (3) normal zur Fallstrecke (4) von der Aufgabe- (19) zur Austrageöffnung (20) zunimmt.

19. Vorrichtung nach einem der Ansprüche 16 bis 18, **dadurch gekennzeichnet, dass** der Querschnitt des Ofenschachts (3) parallel zur Fallstrecke (4) eine konische Form aufweist.

20. Vorrichtung nach einem der Ansprüche 16 bis 19, **dadurch gekennzeichnet, dass** Mittel zur Erzeugung eines Unterdrucks im Ofenschacht (3) entlang der Fallstrecke (4) in einer Fallrichtung (23), die parallel zur Fallstrecke (4) ist und von der Aufgabe- (19) zur Austrageöffnung (20) weist, vorgesehen sind, um eine erste Prozessluft (10) mit im Wesentlichen konstanter Geschwindigkeit durch den Ofenschacht (3) zu saugen.

21. Vorrichtung nach einem der Ansprüche 16 bis 20, **dadurch gekennzeichnet, dass** der Ofenschacht (3) eine innere Oberfläche (13) aufweist, welche mit hitzebeständigem Gewebe (24) oder Glassegmenten ausgekleidet ist.

22. Vorrichtung nach Anspruch 21, **dadurch gekennzeichnet, dass** das hitzebeständige Gewebe (24) luftdurchlässig ist und durch das luftdurchlässige, hitzebeständige Gewebe (24) eine zweite Prozessluft (11) in Richtung zum radialen Zentrum (14) des Ofenschachts (3) einblasbar ist.

23. Vorrichtung nach Anspruch 21, **dadurch gekennzeichnet, dass** zwischen Glassegmenten Spalte angeordnet sind und durch die Spalte eine zweite Prozessluft (11) in Richtung zum radialen Zentrum (14) des Ofenschachts (3) einblasbar ist, um ein Anbacken des Materials (1) an der inneren Oberfläche (13) des Ofenschachts (3) zu verhindern.

24. Vorrichtung nach einem der Ansprüche 22 bis 23, **dadurch gekennzeichnet, dass** mindestens ein Drosselorgan (12) vorgesehen ist, womit die Menge an einzublasender zweiter Prozessluft (11) einstellbar ist.

25. Vorrichtung nach einem der Ansprüche 21 bis 24, **dadurch gekennzeichnet, dass** in Richtung radial nach außen gesehen hinter der Auskleidung (24) der inneren Oberfläche (13) des Ofenschachts (3) die Heizelemente (6) angeordnet sind und hinter den Heizelementen (6) eine Wärmeisolierung (25).

26. Vorrichtung nach einem der Ansprüche 16 bis 25, **dadurch gekennzeichnet, dass** im Bereich des unteren Endes (27) des Ofens (2) bzw. Ofenschachts (3) Mittel (28, 29) zur Beimengung von Kühlluft (16) beim Austragen des Materials (1) aus dem Ofen (2) bzw. Ofenschacht (3) vorgesehen sind.

27. Vorrichtung nach einem der Ansprüche 16 bis 26, **dadurch gekennzeichnet, dass** eine, vorzugsweise wassergekühlte Schurre (8) vorgesehen ist, um das Material (1) aus dem Ofen (2) bzw. Ofenschacht (3) auszutragen.

28. Vorrichtung nach einem der Ansprüche 16 bis 27, **dadurch gekennzeichnet, dass** eine pneumatische Flugstromförderung (17) zur Beförderung des aus dem Ofen (2) bzw. Ofenschacht (3) ausgetragenen Materials (1) in einen Bevorratungsbehälter (39) vorgesehen ist.

## Claims

1. A method for producing an expanded granulate from sand-grain-shaped mineral material (1) with a propellant, e.g. an expanded granulate made of perlite (1) or obsidian sand, wherein the material (1) is supplied to an upright furnace (2) from above, preferably via a chute, the material (1) falls in a furnace shaft (3) of the furnace (2) along a drop section (4) through several heating zones (5) vertically spaced from each other, wherein each heating zone (5) can be heated by at least one independently controllable heating element (6), the material (1) is heated to a critical temperature at which the surfaces (7) of the sand grains (15) are plasticised and the sand grains (15) are expanded as a result of the propellant, and the expanded material (1) is discharged at the bottom end (27) of the furnace (2), **characterized in that** upon detection of a first decrease in the temperature of the material (1) between two successive positions (9) along the drop section (4) the heating elements (6) are regulated along the remaining drop section (4) depending on the critical temperature in order to prevent or enable in a purposeful manner an increase in the material temperature along the remaining drop section (4) to or over the critical temperature.

2. A method according to claim 1, **characterized in that** the heating elements (6) are regulated along the remaining drop section (4) in such a way that the material temperature along the remaining drop section (4) does not increase to or over the critical temperature.

3. A method according to claim 1, **characterized in that** the heating elements (6) are regulated along the remaining drop section (4) in such a way that the material temperature along the remaining drop section (4) increases to or over the critical temperature.

4. A method according to one of the claims 1 to 2, **characterized in that** the power of the heating elements (6) is set to zero along the entire remaining drop section (4).

5. A method according to one of the claims 1 to 4, **characterized in that** the mineral material (1) with propellant concerns mineral material (1) in which water is bound and acts as a propellant, or mineral dust mixed with a water-containing mineral binding agent which acts as a propellant, or mineral dust mixed with a propellant which is mixed with a mineral binding agent, wherein the mineral binding agent preferably contains water and acts as an additional propellant.

6. A method according to one of the claims 1 to 5, **characterized in that** the temperature of the material (1) in the furnace shaft (3) is measured directly or indirectly at several vertically spaced positions (9) in order to detect a first decrease in the temperature of the material, preferably at least 100°C, between two successive positions (9) along the drop section (4).

7. A method according to one of the claims 1 to 6, **characterized in that** the change in the heat flow from the heating elements (6) to the material (1) is determined, wherein the change between a heating zone (5) and a subsequent heating zone (5) which preferably follows the former is determined, and the detection of the first decrease in the temperature of the material (1) between two successive positions (9) along the drop section (4) occurs by detection of an increase in the heat flow from one heating zone (5) to the next one, preferably the next following heating zone (5).

8. A method according to one of the claims 1 to 7, **characterized in that** material (1) is sucked through the furnace shaft (3) together with the first process air (10), preferably by applying a vacuum to the furnace shaft (3).

9. A method according to claim 8, **characterized in that** the first process air (10) flows with substantially constant velocity through the furnace shaft (3).

10. A method according to claim 9, **characterized in that** the expanded material (1) falls with substantially constant velocity through the furnace shaft (3), wherein the velocity of fall of the expanded sand grains depends on their diameter.

11. A method according to one of the claims 1 to 10, **characterized in that** a quantity of second process air (11) which is regulated by means of at least one throttling device (12) is blown from an inner surface (13) of the furnace shaft (3) in the direction towards the radial centre (14) of the furnace shaft (3) in order to prevent baking of the material (1) on the inner surface (13) of the furnace shaft (3).

12. A method according to one of the claims 1 to 11, **characterized in that** the material (1) is thermally preconditioned prior to the entrance into the furnace shaft (3), preferably in a fluidised-bed furnace (38).

13. A method according to one of the claims 1 to 12, **characterized in that** the material (1) is sifted prior to entrance into the furnace shaft (3) in order to ensure the most homogeneous size distribution of the sand grains (15) in the furnace shaft (3).

14. A method according to one of the claims 1 to 13, **characterized in that** cooling air (16) is admixed during the discharge of the material (1) from the furnace (2) or the furnace shaft (3) in order to cool the material (1) to below 100°C, preferably below 80°C.

15. A method according to one of the claims 1 to 13, **characterized in that** the material (1) is conveyed after discharging by means of a pneumatic entrained-flow conveyor (17) to a storage container (39), wherein a cool fluid (18), preferably cold air (18), is used, thereby cooling the material (1) and preferably having room temperature in the storage container (39).

16. An apparatus for producing an expanded granulate, comprising an upright furnace (2) including a furnace shaft (3) with a feed opening (19) at the upper end (26) of the furnace shaft (3) for feeding a sand-grain-shaped material (1), and a discharge opening (20) at the bottom end (27) of the furnace shaft (3) and a drop section (4) situated in the furnace shaft (3) between the feed opening (19) and discharge opening (20), which drop section leads through several heating zones (5) which are vertically separated from each other, wherein the heating zones (5) respectively comprise at least one mutually independently controllable heating element (6) in order to heat the material (1) to a critical temperature, and comprising several temperature sensors (21) for the direct or indirect measurement of the material temperature and/or means for determining the power of the heating elements (6) of the heating zones (5), **characterized in that** an open-loop and closed-loop control unit (40) is provided, which is connected to the temperature sensors (21) and/or the means for determining the power of the heating elements (6) of the heating zones (5) and to the heating elements (6) of the heating zones (5) in order to detect a first decrease in the temperature of the material (1), preferably of at least 100°C, between two successive positions (9) along the drop section (4), and the heating elements (6) are controllable by the open-loop and closed-loop control unit (40) depending on the critical temperature in order to prevent or purposefully enable an increase in the material temperature along the remaining drop section (4) to or over the critical temperature.

17. An apparatus according to claim 16, **characterized in that** at least one temperature sensor (21) is arranged in each heating zone (5).

18. An apparatus according to one of the claims 16 to 17, **characterized in that** the cross-section of the furnace shaft (3) increases normally to the drop section (4) from the feed opening (19) to the discharge opening (20).

19. An apparatus according to one of the claims 16 to 18, **characterized in that** the cross-section of the furnace shaft (3) has a conical shape parallel to the drop section (4).

20. An apparatus according to one of the claims 16 to 19, **characterized in that** means are provided for producing a negative pressure in the furnace shaft (3) along the drop section (4) in a direction of fall (23) which is parallel to the drop section (4) and faces from the feed opening (19) to the discharge opening (20) in order to draw by suction a first process air (10) with substantially constant velocity through the furnace shaft (3).

21. An apparatus according to one of the claims 16 to 20, **characterized in that** the furnace shaft (3) has an inner surface (13) which is lined with heat-resistant fabric (24) or glass segments.

22. An apparatus according to claim 21, **characterized in that** the heat-resistant fabric (24) is air-permeable and second process air (11) can be injected in the direction toward the radial centre (14) of the furnace shaft (3) through the air-permeable, heat-resistant fabric (24).

23. An apparatus according to claim 21, **characterized in that** gaps are arranged between the glass segments and second process air (11) can be injected through the gaps in the direction toward the radial centre (14) of the furnace shaft (3) in order to prevent baking of the material (1) on the inner surface (13) of the furnace shaft (3).

24. An apparatus according to one of the claims 22 to 23, **characterized in that** at least one throttling device (12) is provided with which the quantity of second process air (11) to be injected is adjustable.

25. An apparatus according to one of the claims 21 to 24, **characterized in that** the heating elements (6) are arranged behind the lining (24) of the inner surface (13) of the furnace shaft (3) as seen in the direction radially to the outside, and a thermal insulation (25) is arranged behind the heating elements (6).

26. An apparatus according to one of the claims 16 to 25, **characterized in that** means (28, 29) for admixing cooling air (16) during the discharge of the material (1) from the furnace (2) or furnace shaft (3) are provided in the region of the bottom end (27) of the furnace (2) or furnace shaft (3).

27. An apparatus according to one of the claims 16 to 26, **characterized in that** a preferably water-cooled chute (8) is provided in order to discharge the material (1) from the furnace (2) or furnace shaft (3).

28. An apparatus according to one of the claims 16 to 27, **characterized in that** a pneumatic entrained-flow conveyor (17) is provided for conveying the material (1) discharged from the furnace (2) or the furnace shaft (3) to a storage container (39).

## Revendications

1. Procédé pour la fabrication de granulés expansés en matériau minéral sous forme de grains de sable (1) avec un agent gonflant, par exemple de granulés expansés de sable de perlite (1) ou d'obsidienne, dans lequel le matériau (1) est déposé par le haut dans un four vertical (2), de préférence via une goulotte ; le matériau (1) tombe dans une cuve de four (3) du four (2) le long d'un trajet de chute (4) passant par plusieurs zones de chauffage (5) disposées verticalement et séparées les unes des autres, chaque zone de chauffage (5) étant chauffée avec au moins un élément chauffant (6) pouvant être commandé indépendamment ; le matériau (1) est chauffé pendant ce temps à une température critique à laquelle les surfaces (7) des grains de sable (15) deviennent plastiques et les grains de sable (15) sont expansés sous l'action de l'agent gonflant ; et le matériau (1) expansé est extrait à l'extrémité inférieure (27) du four (2), **caractérisé en ce qu'**en cas de détection d'une première baisse de la température du matériau (1) entre deux positions (9) successives le long du trajet de chute (4), les éléments chauffants (6) sont régulés le long du trajet de chute (4) restant en fonction de la température critique, afin d'empêcher ou de permettre sélectivement une élévation de la température du matériau le long du trajet de chute (4) restant jusqu'à la température critique ou au-delà.

2. Procédé selon la revendication 1, **caractérisé en ce que** les éléments chauffants (6) sont régulés le long du trajet de chute (4) restant de telle manière que la température du matériau ne s'élève pas jusqu'à la température critique ou au-delà le long du trajet de chute (4) restant.

3. Procédé selon la revendication 1, **caractérisé en ce que** les éléments chauffants (6) sont régulés le long du trajet de chute (4) restant de telle manière que la température du matériau s'élève jusqu'à la température critique ou au-delà le long du trajet de chute (4) restant.

4. Procédé selon l'une des revendications 1 à 2, **caractérisé en ce que** la puissance des éléments chauffants (6) est réglée à zéro le long de tout le trajet de chute (4) restant.

5. Procédé selon l'une des revendications 1 à 4, **caractérisé en ce que** le matériau minéral (1) avec l'agent gonflant est un matériau minéral (1) dans lequel de l'eau est liée et agit comme agent gonflant, ou de la poussière minérale mélangée avec un liant minéral contenant de l'eau qui agit comme agent gonflant, ou de la poussière minérale mélangée à un agent gonflant qui est mélangé à un liant minéral, le liant minéral contenant de préférence de l'eau et agissant comme un agent gonflant supplémentaire.

6. Procédé selon l'une des revendications 1 à 5, **caractérisé en ce que** la température du matériau (1) dans la cuve de four (3) est mesurée directement ou indirectement dans plusieurs positions (9) distantes verticalement les unes des autres afin de détecter une première baisse de la température du matériau, de préférence d'au moins 100°C, entre deux positions (9) successives le long du trajet de chute (4).

7. Procédé selon l'une des revendications 1 à 6, **caractérisé en ce que** le changement du flux de chaleur des éléments chauffants (6) vers le matériau (1) est déterminé, le changement étant déterminé entre une zone de chauffage (5) et une zone de chauffage (5) suivante, de préférence celle suivant celle-ci, et la détection de la première baisse de la température du matériau (1) entre deux positions (9) successives le long du trajet de chute (4) est effectuée par la détection d'une augmentation du flux de chaleur d'une zone de chauffage (5) à la zone de chauffage (5) suivante, de préférence à celle suivant celle-ci.

8. Procédé selon l'une des revendications 1 à 7, **caractérisé en ce que** le matériau (1) est aspiré en même temps qu'un premier air de process (10) à travers la cuve de four (3), de préférence par application d'une dépression à la cuve de four (3).

9. Procédé selon la revendication 8, **caractérisé en ce que** le premier air de process (10) s'écoule à une vitesse sensiblement constante à travers la cuve de four (3).

10. Procédé selon la revendication 9, **caractérisé en ce que** le matériau (1) expansé tombe à une vitesse sensiblement constante à travers la cuve de four (3), la vitesse de chute des grains de sable expansés dépendant de leur diamètre.

11. Procédé selon l'une des revendications 1 à 10, **caractérisé en ce qu'**une quantité de deuxième air de process (11) régulée au moyen d'au moins un organe d'étranglement (12) est injectée depuis une surface intérieure (13) de la cuve de four (3) vers le centre radial (14) de la cuve de four (3) pour empêcher l'accumulation de matériau (1) durci sur la surface intérieure (13) de la cuve de four (3).

12. Procédé selon l'une des revendications 1 à 11, **caractérisé en ce que** le matériau (1) subit un pré-conditionnement thermique avant son entrée dans la cuve de four (3), de préférence dans un four à lit fluidisé (38).

13. Procédé selon l'une des revendications 1 à 12, **caractérisé en ce que** le matériau (1) est tamisé avant son entrée dans la cuve de four (3) afin d'assurer une répartition granulométrique aussi homogène que possible des grains de sable (15) dans la cuve de four (3).

14. Procédé selon l'une des revendications 1 à 13, **caractérisé en ce que** lors de l'extraction du matériau (1) hors du four (2) ou de la cuve de four (3), de l'air de refroidissement (16) est ajouté afin de refroidir le matériau (1) à moins de 100°C, de préférence à moins de 80°C.

15. Procédé selon l'une des revendications 1 à 13, **caractérisé en ce que** le matériau (1) est transporté après l'extraction au moyen d'un transport pneumatique en phase diluée (17) jusqu'à un réservoir (39), en utilisant un fluide frais (18), de préférence de l'air frais (18), de sorte que le matériau (1) est refroidi et se trouve de préférence à la température ambiante dans le réservoir (39).

16. Dispositif pour la fabrication de granulés expansés, comprenant un four vertical (2) avec une cuve de four (3) dotée d'une ouverture d'introduction (19) à l'extrémité supérieure (26) de la cuve du four (3) pour introduire un matériau en grains sableux (1) et d'une ouverture d'extraction (20) à l'extrémité inférieure (27) de la cuve de four (3) et avec un trajet de chute (4) situé entre l'ouverture d'introduction (19) et l'ouverture d'extraction (20) dans la cuve de four (3), qui passe par plusieurs zones de chauffage (5) disposées dans le sens vertical et séparées les unes des autres, lesquelles zones de chauffage (5) présentent chacune au moins un élément chauffant (6) pouvant être commandé indépendamment pour chauffer le matériau (1) à une température critique, et comprenant plusieurs capteurs de température (21) pour la mesure directe ou indirecte de la température du matériau et/ou des moyens pour la détermination de la puissance des éléments chauffants (6) des zones de chauffage (5), **caractérisé en ce qu'**il est prévu une unité de régulation et de commande (40) qui est reliée aux capteurs de température (21) et/ou aux moyens pour déterminer la puissance des éléments chauffants (6) des zones de chauffage (5) et avec les éléments chauffants (6) des zones de chauffage (5) pour détecter une première baisse de la température du matériau (1), de préférence d'au moins 100°C, entre deux positions (9) successives le long du trajet de chute (4), et **en ce que** les éléments chauffants (6) peuvent être régulés par l'unité de régulation et de commande (40) en fonction de la température critique afin d'empêcher ou d'obtenir sélectivement une augmentation de la température du matériau le long du trajet de chute (4) restant jusqu'à la température critique ou au-delà.

17. Dispositif selon la revendication 16, **caractérisé en ce qu'**au moins un capteur de température (21) est disposé dans chaque zone de chauffage (5).

18. Dispositif selon l'une des revendications 16 à 17, **caractérisé en ce que** la section de la cuve de four (3) perpendiculairement au trajet de chute (4) augmente de l'ouverture d'introduction (19) à l'ouverture d'extraction (20).

19. Dispositif selon l'une des revendications 16 à 18, **caractérisé en ce que** la section de la cuve de four (3) parallèlement au trajet de chute (4) présente une forme conique.

20. Dispositif selon l'une des revendications 16 à 19, **caractérisé en ce qu'**il est prévu des moyens pour produire une dépression dans la cuve de four (3) le long du trajet de chute (4) dans une direction de chute (23) parallèle au trajet de chute (4) et orientée de l'ouverture d'introduction (19) vers l'ouverture d'extraction (20), pour aspirer un premier air de process (10) à une vitesse sensiblement constante à travers la cuve de four (3).

21. Dispositif selon l'une des revendications 16 à 20, **caractérisé en ce que** la cuve de four (3) présente une surface intérieure (13) qui est revêtu d'un textile résistant à la chaleur (24) ou de segments en verre.

22. Dispositif selon la revendication 21, **caractérisé en ce que** le textile résistant à la chaleur (24) est perméable à l'air et un deuxième air de process (11) peut être injecté à travers le textile résistant à la chaleur (24) perméable à l'air en direction du centre radial (14) de la cuve de four (3).

23. Dispositif selon la revendication 21, **caractérisé en ce que** des fentes sont disposées entre les segments en verre et un deuxième air de process (11) peut être injecté à travers les fentes en direction du centre radial (14) de la cuve de four (3) pour empêcher un dépôt de matériau (1) durci sur la surface intérieure (13) de la cuve de four (3).

24. Dispositif selon l'une des revendications 22 à 23, **caractérisé en ce qu'**il est prévu au moins un organe d'étranglement (12) permettant de régler le débit de deuxième air de process (11) à injecter.

25. Dispositif selon l'une des revendications 21 à 24, **caractérisé en ce que**, vus dans le sens radial vers l'extérieur, les éléments chauffants (6) sont disposés derrière le revêtement (24) de la surface intérieure (13) de la cuve de four (3) et une isolation thermique (25) est disposée derrière les éléments chauffants (6).

26. Dispositif selon l'une des revendications 16 à 25, **caractérisé en ce que** sont prévus au niveau de l'extrémité inférieure (27) du four (2) ou de la cuve de four (3) des moyens (28, 29) pour l'addition d'air de refroidissement (16) lors de l'extraction du matériau (1) hors du four (2) ou de la cuve de four (3).

27. Dispositif selon l'une des revendications 16 à 26, **caractérisé en ce qu'**il est prévu une goulotte (8), de préférence refroidie par eau, pour extraire le matériau (1) du four (2) ou de la cuve de four (3).

28. Dispositif selon l'une des revendications 16 à 27, **caractérisé en ce qu'**il est prévu un transport pneumatique en phase diluée (17) pour acheminer le matériau (1) extrait du four (2) ou de la cuve de four (3) dans un réservoir (39).
